(19) Europäisches Patentamt / European Patent Office / Office européen des brevets

(11) **EP 3 329 043 B1**

(12) **FASCICULE DE BREVET EUROPEEN**

(45) Date de publication et mention
de la délivrance du brevet:
**05.03.2025 Bulletin 2025/10**

(21) Numéro de dépôt: **16760127.7**

(22) Date de dépôt: **29.07.2016**

(51) Classification Internationale des Brevets (IPC):
***D03D 15/46*** *(2021.01)*     ***D03D 19/00*** *(2006.01)*
***E04G 23/02*** *(2006.01)*

(52) Classification Coopérative des Brevets (CPC):
**D03D 15/46; D03D 19/00; E04G 23/0218;**
D10B 2505/02; E04G 2023/0251

(86) Numéro de dépôt international:
**PCT/FR2016/051991**

(87) Numéro de publication internationale:
**WO 2017/017393 (02.02.2017 Gazette 2017/05)**

(54) **SYSTEME COMPOSITE ET PROCEDE DE CONSOLIDATION NOTAMMENT D'OUVRAGES EN BETON ARME OU DE MAÇONNERIE MATRICE DURCISSABLE OU DURCIE ET GRILLE DE RENFORT TEXTILE CONSTITUANT CE SYSTEME**

VERBUNDSYSTEM UND VERFAHREN ZUR BEWEHRUNG, INSBESONDERE STRUKTUREN AUS VERSTÄRKTEM BETON ODER MAUERWERK MIT HÄRTBARER ODER GEHÄRTETER MATRIX UND TEXTILEM BEWEHRUNGSGITTER

COMPOSITE SYSTEM AND METHOD FOR REINFORCING, IN PARTICULAR, STRUCTURES MADE FROM REINFORCED CONCRETE OR MASONRY COMPRISING A CURABLE OR CURED MATRIX AND TEXTILE REINFORCEMENT GRID CONSTITUTING SAID SYSTEM

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **30.07.2015 FR 1557336**

(43) Date de publication de la demande:
**06.06.2018 Bulletin 2018/23**

(73) Titulaire: **Sika Technology AG**
**6340 Baar (CH)**

(72) Inventeur: **HOUEL, Eric**
**38070 Saint Quentin Fallavier (FR)**

(74) Mandataire: **Sika Patent Attorneys**
**C/o Sika Technology AG**
**Corp. IP Dept.**
**Tüffenwies 16**
**8048 Zürich (CH)**

(56) Documents cités:
**EP-A1- 0 387 968**     **EP-A1- 0 387 968**
**EP-B1- 0 387 968**     **WO-A1-2012/123682**
**WO-A1-2012/123682**     **JP-A- 2001 226 849**
**JP-A- 2001 226 849**     **KR-B1- 101 308 513**
**KR-B1- 101 308 513**     **US-A- 4 320 160**
**US-A- 4 320 160**

## Description

### Domaine technique

Le domaine technique de l'invention est celui de la consolidation notamment d'ouvrages en béton armé ou de maçonnerie, tels que des bâtiments, des constructions de génie civil (ponts, tunnels, canalisations...).

En particulier, l'invention concerne un système composite de consolidation notamment d'ouvrages en béton armé ou de maçonnerie comprenant une matrice durcissable ou durcie et une grille de renfort textile, de même que ces deux éléments pris en tant que tels.

L'invention a également pour objet un procédé de consolidation notamment d'ouvrages en béton armé ou de maçonnerie, ainsi que la structure composite obtenue à l'issue de ce procédé.

Les formulations sèches et humides de la matrice durcissable, qui est de préférence une matrice hydraulique, sont également visées par l'invention.

Les ouvrages consolidés notamment en béton armé ou de maçonnerie font également partie intégrante de l'invention.

### Arrière-plan technologique

Les ouvrages en béton armé ou de maçonnerie sont des édifices qui peuvent être en aggloméré, béton armé ou autre, brique, caillou, ciment, crépi, latte, meulière, moellon, mortier, parpaing, pierre, pisé, plâtre, briques en béton. Ces édifices sont sujets à des altérations provoquées par les sollicitations subies et/ou par les agressions climatiques ou environnementales de toute nature, y compris sismiques, et/ou éventuellement, par des vices de conception et/ou de réalisation.

Par ailleurs, la destination d'un bâtiment peut changer. Une habitation peut, par exemple, devenir un local pour une activité tertiaire industrielle. Un tel changement peut aller de pair avec une modification des contraintes subies par le bâtiment. Il peut s'agir par exemple de l'évolution à la hausse de la charge que peut supporter un plancher.

Toutes ces causes imposent un renforcement de la structure des constructions concernées.

Certains procédés de renforcement connus consistent dans le collage de tissus ou de lamelles de fibres de carbone sur les éléments de structure (planchers, poutres, murs, poteaux, tunnels, canalisations). Ces tissus ou lamelles sont imprégnés de résine durcissable (résine époxy) et fixés sur ces éléments de structure. Après un durcissement rapide de la résine, on obtient un composite tissu ou lamelle de carbone/résine qui augmente la résistance mécanique ainsi que la ductilité de l'ouvrage consolidé.

Ces procédés connus présentent deux inconvénients majeurs :

- les résines époxy doivent être appliquées uniquement sur des supports secs (pas d'adhérence sur béton humide) ;
- sur le plan sanitaire, elles sont potentiellement toxiques, polluantes et sont susceptibles d'émettre des émanations dangereuses en cas d'incendie.

On connaît également par la demande de brevet DE19525508A1 un procédé pour améliorer la durabilité de parties de bâtiment en béton ou en maçonnerie, au moyen d'un revêtement multicouche obtenu par application, sur au moins une surface desdites parties de bâtiment, d'une matrice minérale formée par une couche de mortier hydraulique [ciment (1): cendres (0,33): eau (0,36): dispersion styrol/acrylat (0,12)], qui est renforcée par un treillis ou un textile poreux à base de fibres de verre, de carbone, ou d'aramide", et qui présente un module d'élasticité supérieur à 20000 N/mm$^2$, un allongement à la rupture supérieur à 0,4% et densités surfaciques de plus de 75 g/m$^2$. Le treillis ou le textile poreux est inclus dans le mortier non encore durci. Ces opérations de formation d'une couche de mortier hydraulique et d'inclusion d'un treillis ou d'un textile poreux sont répétées au moins une fois. À chaque fois, le treillis ou le textile poreux est bien inclus dans la couche de mortier non encore durci, pour former un composite durci dans lequel le mortier durci forme une matrice bien interpénétrée par le treillis ou textile poreux.

Le brevet européen EP0994223B1 divulgue un tissu traité thermiquement utile comme armature de travaux de construction, dans lequel la chaîne est constituée de fils dont les fibres (fils de carbone 12K 800 tex) ont des modules élevés, un coefficient d'élasticité sous tension, supérieur à 10GPa et une limite élastique à la tension supérieure à 600MPa, et dans lequel la trame est constituée de fils de verre (60 tex) revêtus d'une matière polymère thermocollante (40 tex /hot melt polyamide) dont la température de fusion est comprise entre 40 et 250°C. La quantité de matière polymère thermocollante est entre 10 et 300 % en poids par rapport aux fils de verre. Ce tissu est appliqué sur des structures de bâtiment au moyen d'une résine d'imprégnation. Pour ce faire, on enduit la surface de la structure de bâtiment considérée, d'une couche de résine d'imprégnation, on inclut le tissu de renfort dans cette première couche, on applique une deuxième couche de résine d'imprégnation, on inclut à nouveau du tissu de renfort dans cette deuxième couche sur lequel on appose une troisième couche de résine d'imprégnation.

Le brevet européen EP1245547B1 décrit un mortier cimentaire destiné à être utilisé pour renforcer des éléments de construction, en combinaison avec des treillis en fibres synthétiques (fibre de carbone, d'aramide, de verre, de polyester de polyéthylène ou autre) dont la taille de maille est comprise entre 10 et 35 mm. Le mortier comprend du ciment, une résine copolymère fluidifiante, un additif thixotropique dérivé de la cellulose telle que la méthylhydroxyéthylcellulose ou la méthylcellulose, une charge fine par exemple à base de quartz (500 microns) des cendres volantes ou une poudre de marbre et éventuellement de la silice, ainsi que d'autres additifs.

Le brevet européen EP1893793B1 propose un perfectionnement des treillis de renfort utilisés dans les moyens de consolidation d'éléments de construction, divulguées par EP1245547B1. Ce perfectionnement consiste en ce que les fibres constitutives desdits treillis de renfort sont des fibres de poly [benz (1, 2-D: 5,4-D ') bisoxazole-2,6-diyl-1, 4-phénylène]. KR101308513B1 divulgue une grille selon le préambule de la revendication 1.

## Problème technique - Objectifs de l'invention

Toutes ces propositions techniques de l'art antérieur sont des ajustements à la marge, qui ne permettent pas d'obtenir des améliorations significatives, notamment des propriétés mécaniques des structures composites de renfort (matrice cimentaire/tissu de carbone et/ou de verre) de constructions ou d'ouvrages de génie civil.

Dans ce contexte, le problème technique à la base de la présente invention est de satisfaire à au moins l'un des objectifs énoncés ci-après :

(i) Fournir un système composite de consolidation d'ouvrages en béton armé ou de maçonnerie comprenant une matrice durcissable ou durcie et une grille de renfort textile, permettant de produire une structure composite durcie dotée de propriétés mécaniques améliorées et ce, aussi bien à court terme que sur le long terme (e.g. comportement au fléchissement, dureté, résistance en flexion/compression, durabilité, cohésion).

(ii) Fournir un système composite de consolidation d'ouvrages en béton armé ou de maçonnerie comprenant une matrice durcissable ou durcie et une grille de renfort textile, permettant de produire une structure composite durcie, mécaniquement résistante et suffisamment ductile pour assumer au mieux sa fonction de consolidation d'ouvrages en béton armé ou de maçonnerie.

(iii) Fournir un système composite de consolidation d'ouvrages en béton armé ou de maçonnerie comprenant une matrice durcissable ou durcie et une grille de renfort textile, permettant de produire une structure composite durcie, mécaniquement efficace et adhérant parfaitement au support à consolider, notamment dans des conditions humides de mise en œuvre.

(iv) Fournir un système composite de consolidation d'ouvrages en béton armé ou de maçonnerie comprenant une matrice durcissable ou durcie et une grille de renfort textile, permettant de produire une structure composite durcie, mécaniquement efficace et pour lequel la grille de renfort textile puisse être fabriquée aisément à l'échelle industrielle.

(v) Fournir un système composite de consolidation d'ouvrages en béton armé ou de maçonnerie comprenant une matrice durcissable ou durcie et une grille de renfort textile, permettant de produire une structure composite durcie, mécaniquement efficace et facile à mettre en œuvre par un opérateur lors de la consolidation.

(vi) Fournir un système composite de consolidation d'ouvrages en béton armé ou de maçonnerie comprenant une matrice durcissable ou durcie et une grille de renfort textile, permettant de produire une structure composite durcie, mécaniquement efficace et ne nécessitant pas des conditions particulières de stockage aussi bien pour la grille de renfort que pour la matrice.

(vii) Fournir un système composite de consolidation d'ouvrages en béton armé ou de maçonnerie comprenant une matrice durcissable ou durcie et une grille de renfort textile, permettant de produire une structure composite durcie, mécaniquement efficace et économique.

(viii) Fournir un système composite de consolidation d'ouvrages en béton armé ou de maçonnerie comprenant une matrice durcissable ou durcie et une grille de renfort textile, permettant de produire une structure composite durcie, mécaniquement efficace et durable.

(ix) Fournir un système composite de consolidation d'ouvrages en béton armé ou de maçonnerie comprenant une matrice durcissable ou durcie et une grille de renfort textile, permettant de produire une structure composite durcie, mécaniquement efficace, quelle que soit la morphologie de l'ouvrage à consolider notamment dans le cas de canalisations, en particulier des canalisations de réseaux d'assainissement.

(x) Fournir un système composite de consolidation d'ouvrages en béton armé ou de maçonnerie comprenant une matrice durcissable ou durcie et une grille de renfort textile, permettant de chemiser aisément des canalisations pour les consolider, en particulier des canalisations de réseaux d'assainissement.

(xi) Fournir un système composite de consolidation d'ouvrages de maçonnerie comprenant une matrice durcissable ou durcie et une grille de renfort textile, permettant de produire une structure composite durcie, mécaniquement efficace et éco-compatible, c'est-à-dire évitant autant que possible le recours à des composés susceptibles d'être nuisible aux opérateurs et/ou à l'environnement.

(xii) Fournir un système composite de consolidation d'ouvrages en béton armé ou de maçonnerie comprenant une matrice durcissable ou durcie et une grille de renfort textile, permettant de produire une structure composite durcie, mécaniquement efficace, dans lequel la matrice durcissable est une composition sèche (*e.g.*cimentaire) conduisant, après gâchage avec un liquide (*e.g.* eau), à une formulation humide projetable aisément, simple à mettre en œuvre, présentant une consistance et une viscosité de pâte permettant le pompage par une machine à projeter et une ouvrabilité suffisamment longue pour réaliser le gâchage et la réalisation de la structure de consolidation, tout en restant économique, et stable après gâchage.

(xiii) Fournir une structure composite obtenue à partir du système tel que visé dans les objectifs (i) à (xii) ci-dessus, et qui soit performante mécaniquement, facile à réaliser dans des contextes variés et économique.

(xiv) Fournir une structure composite obtenue à partir du système tel que visé dans les objectifs (i) à (xii) ci-dessus, et qui soit utilisable pour augmenter la résistance aux charges sismiques. d'ouvrages en béton armé ou de maçonnerie.

(xv) Fournir un procédé de consolidation d'ouvrages en béton armé ou de maçonnerie, au moyen du système tel que visé dans les objectifs (i) à (xii) ci-dessus, qui soit facile à mettre en œuvre dans des contextes variés, tout en restant économique.

## Brève description de l'invention

Il est du mérite des inventeurs, d'avoir mis en évidence que l'un des points clés pour ce type de structures composites matrice/renfort textile, tient dans l'optimisation de l'ancrage de la matrice dans l'armature textile. En particulier, les inventeurs ont constaté qu'il est important d'avoir une bonne interpénétration et une interpénétration régulière de la matrice cimentaire au travers des jours du tissu de renfort. Un emprisonnement homogène du tissu de renfort par la matrice cimentaire est en effet un moyen d'éviter des phénomènes de cisaillement mécanique, susceptible de réduire à néant la consolidation recherchée.

Forts de ces constats, les inventeurs proposent une solution au problème énoncé dans tout ou partie des objectifs listés ci-dessus. Cette solution tient au moins en partie dans la mise en œuvre d'un renfort textile comprenant un moyen de stabilisation géométrique et dimensionnelle du réseau.

D'où il s'ensuit que la présente invention concerne, dans un premier de ses aspects, un système composite selon la revendication 2 de consolidation d'ouvrages, notamment de béton armé ou de maçonnerie, comprenant une matrice durcissable ou durcie et une grille de renfort textile, dans lequel la grille comprend au moins une couche formée:

- d'une part, d'une armature constituée de fils de chaîne et de fils de trame plats;
- et, d'autre part, d'un réseau de liage de l'armature; où le réseau de liage est tel qu'il assure la stabilité dimensionnelle sous contrainte des mailles de l'armature, avant l'application de la grille sur l'ouvrage à consolider, où le réseau de liage de l'armature est une armure constituée d'éléments de chaîne et d'éléments de trame, et où cette armure est à pas de gaze; chaque élément de chaîne de cette armure comprenant au moins deux fils de liage, de préférence deux, et chaque élément de trame de cette armure comprenant au moins un fil de liage, de préférence un, et où:

  • chaque élément de chaîne de l'armure comprend deux fils de liage de chaine et chaque élément de trame de l'armure comprend un fil de liage de trame,
  • l'un des deux fils de liage passe d'un même côté C1 de tous les fils de trame de l'armature,
  • l'autre fil de liage de chaine passe d'un même côté C2 opposé à C1 de tous les fils de trame de l'armature,

entre deux fils de trame successifs de l'armature, les fils de liage de chaine se croisent avant le fil de liage de trame, passent de part et d'autre du fil de liage de trame puis se recroisent pour enserrer le fil de trame de l'armature.

Ce réseau de liage particulier conforme à l'invention permet d'obtenir, in fine, une structure composite de consolidation d'ouvrages, notamment de béton armé ou de maçonnerie, présentant les propriétés mécaniques attendues en termes de résistance et de ductilité, en termes d'adhérence au support à consolider et en termes de facilité de mise en œuvre et de stockage.

Selon d'autres de ses aspects, l'invention concerne les éléments suivants pris en tant que tels et indépendamment les uns des autres : la grille de renfort textile selon la revendication 1 et la structure composite durcie matrice/grille apposée sur l'ouvrage à consolider.

En particulier, l'invention concerne une structure composite ayant un module de traction élastique MTE inférieur ou égal à -en MPa et selon un ordre croissant de préférence-100.000, 80.000, 70.000.

Selon un autre de ses aspects, mais qui n'est pas revendiqué, l'invention vise l'utilisation d'une structure composite ayant un module de traction élastique MTE inférieur ou égal à -en MPa et selon un ordre croissant de préférence- 100.000, 80.000, 70.000, pour augmenter la résistance aux charges sismiques d'un ouvrage en béton armé ou de maçonnerie, ladite structure étant obtenue à partir d'un système composite de consolidation d'ouvrages, comprenant une matrice durcissable ou durcie et une grille de renfort textile, dans lequel la grille comprend au moins une couche formée d'une armature constituée de fils de chaîne et de fils de trame plats et présente une stabilité dimensionnelle sous contrainte des mailles de l'armature, avant l'application de la grille sur l'ouvrage à consolider.

Selon un autre de ses aspects, l'invention vise également un procédé de consolidation selon la revendication 8 d'un ouvrage où il consiste à maroufler la grille selon l'invention sur l'ouvrage avec la matrice selon l'invention, après avoir mélangé ladite matrice avec un liquide, de préférence de l'eau, pour obtenir une matrice humide durcissable.

Selon un autre de ses aspects, mais qui n'est pas revendiqué, l'invention a trait à une formulation humide comprenant la matrice selon l'invention, mélangée à un liquide, de préférence de l'eau; ainsi qu'au procédé de préparation de cette formulation humide.

Selon un autre de ses aspects, l'invention a pour objet l'utilisation selon la revendication 10 d'une grille selon l'invention pour consolider un ouvrage, notamment de béton armé ou de maçonnerie, par marouflage à l'aide d'une formulation humide selon l'invention.

*Définitions*

Dans tout le présent exposé, tout singulier désigne indifféremment un singulier ou un pluriel.

Les définitions données ci-après à titre d'exemples, peuvent servir à l'interprétation du présent exposé :

- "*mortier*" désigne un mélange sec ou humide ou durci d'un ou plusieurs liants organiques et/ou minéraux, de granulats de diamètre < 5mm (sables -agrégats) et éventuellement de fillers et/ou d'additifs et/ou d'adjuvants.
- "*sensiblement*" signifie à plus ou moins 10 % près, voire à plus ou moins 5% près, rapporté à l'unité de mesure utilisée.
- Le terme "*d50*" qui fait référence dans cet exposé au critère de granulométrie, désigne le diamètre médian. Cela signifie que 50% des particules ont une taille inférieure au "*d50*". La granulométrie est mesurée par tamisage suivant la norme EN12192-1

**Description détaillée de l'invention**

*GRILLE*

La grille selon l'invention présente au moins une caractéristique essentielle pour obtenir un renfort optimal du matériau sur lequel le système est appliqué :

- La stabilité dimensionnelle sous contrainte de la grille.

Cette caractéristique est préférablement associée à la caractéristique supplémentaire suivante:

- La régularité géométrique de la grille qui permet une reprise homogène des efforts sur l'ensemble de la surface concernée par le renfort;

La stabilité dimensionnelle sous contrainte et, avantageusement la régularité géométrique, influent directement sur la capacité de la grille à reprendre de manière homogène, les efforts sur l'ensemble de sa surface concernée par le renfort.

La stabilité dimensionnelle sous contrainte est qualifiée comme suit dans un test TS défini infra :
La déformation d'un échantillon de 40x40 cm suspendu par ses deux coins supérieurs dans un plan vertical et soumis à la contrainte en traction d'une masse de 1 (déformation D1) ou 2 kg (déformation D2) accrochée au milieu du bord inférieur de l'échantillon, est telle que:

- D1 inférieure ou égale à - en cm et dans un ordre croissant de préférence - : 2,5; 1,5; 1,0 ; 0,8 ; 0,6 ; 0,5 ; 0,3 ; 0,2 ; 0,1 ;
- D2 inférieure ou égale à - en cm et dans un ordre croissant de préférence - : 5 ; 4 ; 3 ; 2 ; 1,8 ; 1,6 ; 1,5 ; 1,4 ; 1,2 ; 1,0 ;

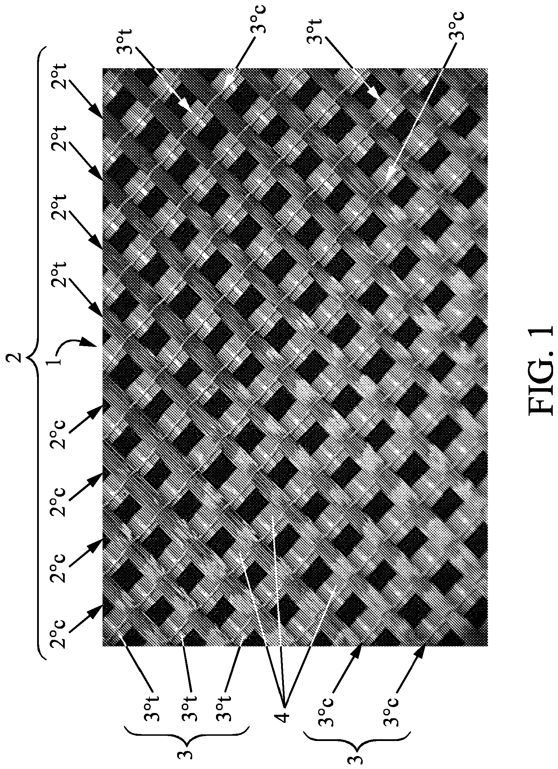

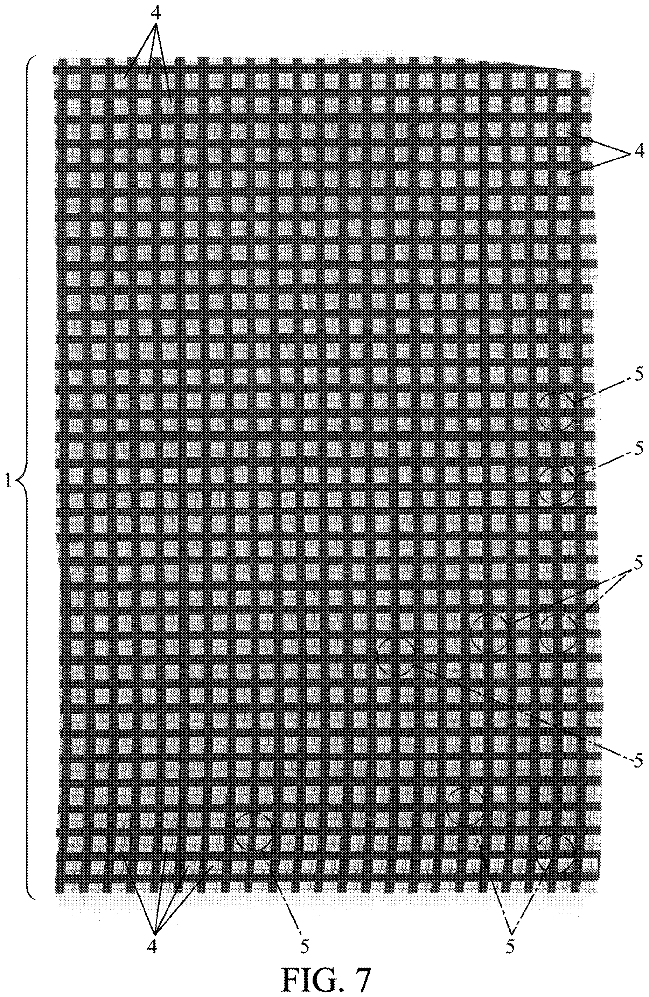

La régularité géométrique peut aussi être appréciée par un test **TR** défini infra:
L'écart-type en % par rapport à la moyenne des surfaces d'un panel aléatoire de 20 jours de l'armature (sur les figures annexées, l'armature est désignée par la référence 2 et les jours ou mailles de cette armature sont désignés par la référence 4 -Fig. 1&7-) ou d'un panel de 20 jours du réseau de liage (sur les figures annexées, le réseau de liage est désigné par la référence 3 et les jours ou mailles de ce réseau de liage sont désignés par la référence 5 - Fig.&7-), d'un échantillon de grille de 40x40 cm est inférieur ou égal à 15 %, de préférence à 10%, et, plus préférentiellement encore à 8%.

Cette stabilité dimensionnelle sous contrainte de la grille, et, avantageusement la régularité géométrique de cette grille notamment juste après sa fabrication, voire après son conditionnement en rouleau juste après la fabrication, sont garantes de sa capacité à ne pas se déformer et sont assurées, en particulier par le réseau de liage de l'armature.

Selon une modalité remarquable de l'invention, la stabilité dimensionnelle sous contrainte, voire la régularité géométrique sont promues par l'enduction de la grille, qui permet de " figer " l'assemblage au cours du processus d'élaboration de la grille et assure une quasi parfaite stabilité dimensionnelle de la grille lors des sollicitations qui peuvent avoir lieu pendant les étapes de manutention précédant sa mise en place, ainsi qu'à l'occasion de la mise en place du renfort.

Ainsi, conformément à une caractéristique préférée de l'invention, au moins une partie des fils de la grille sont enduits/imprégnés d'au moins un polymère, de préférence choisi dans le groupe comprenant-ou mieux encore constitué par- :

- les (co)polymères (meth)acryliques, avantageusement sélectionnés dans le sous-groupe comprenant-ou mieux encore constitué par- les copolymères d'alkylesters comprenant avantageusement 1 à 8 atomes de carbone, avec l'acide acrylique, ou l'acide méthacrylique, en particulier ceux choisis dans la famille comprenant-ou mieux encore constituée par- de préférence l'acrylate de méthyle, l'acrylate d'éthyle, l'acrylate de butyle, l'acrylate d'éthyle 2 hexyle et leurs correspondants avec l'acide méthacrylique; et leurs mélanges;
- les (co)polymères d'esters vinyliques avantageusement sélectionnés dans le sous-groupe comprenant-ou mieux encore constitué par- les homopolymères et les copolymères d'acétate de vinyle, en particulier ceux choisis dans la famille comprenant-ou mieux encore constituée par- les copolymères d'acétate de vinyle et d'éthylène, les (co)polymères de chlorure de vinyle tels que les copolymères de chlorure de vinyle et d'éthylène, les (co)polymères de laurate de vinyle, les (co)polymères de versatate de vinyle, les (co)polymères d'esters vinyliques d'acides alpha monocarboxyliques, saturés ou non, ramifiés ou non, comprenant avantageusement 9 ou 10 atomes de carbone, les homopolymères d'esters vinyliques d'acides alkylcarboxyliques, saturés ou non, ramifiés ou non, comprenant avantageusement de 3 à 8 atomes de carbone, des copolymères de ces derniers homopolymères avec l'éthylène, le chlorure de vinyle, et/ou d'autres esters vinyliques; et leurs mélanges;
- les (co)polymères de styrène avec le butadiène ou avec un ou plusieurs esters acryliques avantageusement sélectionnés dans le sous-groupe comprenant-ou mieux encore constitué par les alkylesters éthyléniquement insaturés comprenant avantageusement de 1 à 8 atomes de carbone de l'acide (meth)acrylique, de préférence l'acrylate de méthyle, l'acrylate d'éthyle, l'acrylate de butyle, l'acrylate d'éthyle-2-hexyle et leurs correspondants avec l'acide méthacrylique, et leurs mélanges;
- les (co)polymères thermofusibles, avantageusement sélectionnés dans le sous-groupe comprenant-ou mieux encore constitué par- les polyéthylènes, les polypropylènes, les polyesters, les polyamides, les copolymères Ethylène-Propylène-Diène Monomère (EPDM), et leurs mélanges;
- et leurs mélanges.

Avantageusement, le nombre de croisement des fils de liage dans chaque jour de l'armature non tissée est inférieur ou égal à 4, de préférence inférieur ou égal à 2 et plus préférentiellement encore égal à 1. Les jours de l'armature ne sont pas trop occultés par le réseau de liage.

Suivant une caractéristique remarquable de l'invention, la grille comprend du carbone dans une quantité (en g/m$^2$) comprise dans les intervalles suivants -selon un ordre croissant de préférence-: [150- 500] ; [170- 300]; [180-280] ; [190-260]; [200-250].

L'invention concerne aussi, la grille de consolidation selon la revendication 1 prise en tant que telle, indépendamment du système selon l'invention. Cette grille de consolidation d'ouvrage de béton armé ou de maçonnerie comprenant au moins une couche formée:

- d'une part, d'une armature constituée de fils de chaîne et de fils de trame plats;
- et, d'autre part, d'un réseau de liage de l'armature; où le réseau de liage est tel qu'il assure la régularité géométrique et la stabilité dimensionnelle sous contrainte des mailles de l'armature, avant l'application de la grille sur l'ouvrage à consolider, où le réseau de liage de l'armature est une armure constituée d'éléments de chaîne et d'éléments de trame, et où cette armure est à pas de gaze; chaque élément de chaîne de cette armure comprenant au moins deux fils de liage, de préférence deux, et chaque élément de trame de cette armure comprenant au moins un fil de liage, de préférence un, et où:

- chaque élément de chaîne de l'armure comprend deux fils de liage de chaine et chaque élément de trame de l'armure comprend un fil de liage de trame,
- l'un des deux fils de liage passe d'un même côté C1 de tous les fils de trame de l'armature,
- l'autre fil de liage de chaine passe d'un même côté C2 opposé à C1 de tous les fils de trame de l'armature,

entre deux fils de trame successifs de l'armature, les fils de liage de chaine se croisent avant le fil de liage de trame, passent de part et d'autre du fil de liage de trame puis se recroisent pour enserrer le fil de trame de l'armature.

Avantageusement, cette grille telle que définie dans la présente description, l'exemple et les figures, se présente, de préférence, sous forme de rouleaux ou sous forme de plaques.

*ARMATURE*

L'armature est tissée ou non tissée, de préférence non tissée.

Avantageusement, les fils de trame et les fils de chaîne de l'armature sont compris dans deux plans parallèles.

En pratique, les fils de trame de l'armature sont de préférence disposés sur les fils de chaîne de cette armature, lesquels fils de chaîne formant la face de l'armature destinée à être mise en contact avec l'ouvrage à consolider.

La superposition des fils de trame sur les fils de chaîne, permet d'obtenir une surface plane et rectiligne.

Suivant une modalité remarquable de l'invention, les fils de trame et les fils de chaîne de l'armature sont constitués chacun d'un faisceau de filaments et présentent au moins l'une des caractéristiques suivantes :

    i. Les filaments d'un faisceau sont à base d'un ou plusieurs matériaux choisis dans le groupe comprenant-ou mieux encore constitué par- le carbone, le verre, le basalte, les métaux, les matériaux végétaux, avantageusement sélectionnés dans le sous-groupe comprenant-ou mieux encore constitué par- le chanvre, les matériaux synthétiques, avantageusement sélectionnés dans le sous-groupe comprenant-ou mieux encore constitué par- l'aramide, le poly[benz(1 ,2-D:5,4-D')bisoxazole-2,6-diyl-1 ,4-phenylène], le polyéthylène, le polypropylène, les polyamides, les polyimides, les polyesters;

    le carbone étant préféré;

    ii. La résistance à la traction (en MPa) de chaque fil est comprise dans les intervalles suivants -selon un ordre croissant de préférence-: [1000-10000]; [2000-8000] ; [3000-7000];

    iii. Le module de traction (en GPa) de chaque fil est compris dans les intervalles suivants -selon un ordre croissant de préférence-: [150-700] ; [200-400];

    iv. L'allongement (en %) de chaque fil est compris dans les intervalles suivants -selon un ordre croissant de préférence-: [0,1- 6] ; [0,5- 3,5]; [1-2,5].

Selon cette caractéristique (i), les filaments d'un faisceau peuvent être tous réalisés à partir d'un seul et même matériau, ou peuvent être réalisés dans différents matériaux, chaque filament étant réalisé à partir d'un seul matériau (par exemple filaments métal/filaments matériau végétal -e.g. chanvre- ), voire peuvent être réalisés dans un seul et même matériau et/ou différents matériaux, chaque filament étant réalisé à partir de plusieurs matériaux. Toutes les combinaisons sont envisageables pour un même faisceau ou pour tout ou partie.

Dans un mode de réalisation préférée de l'invention, les fils de chaîne et les fils de trame de l'armature sont constitués chacun d'un faisceau de filaments ou fibres, de préférence en carbone, ensimés.

Ces filaments ou fibres, de préférence carbone, ne sont pas mécaniquement liées les unes aux autres, de sorte qu'en fonction de la tension des fils, leur largeur et leur épaisseur peuvent varier.

À titre d'exemple de référence commerciale de fils de carbone susceptibles d'être utilisés pour former des fils de chaînes et de trame de cette natte, on peut citer les fils commercialisés sous la marque TORAYCA® par la société Soficar, sous les références FT300/T300, T300J, T400 H, T600S, T700S, T700G, T800H, T800S, T1000G, M35J, M40J, M46J, M50J, M55J, M60J, M30S,M40.

*RESEAU DE LIAGE*

Les fils de l'armature, de préférence en carbone, sont liés par des fils de liage qui forment un réseau. Le rôle des fils de liage est triple. Ils permettent d'avoir une géométrie de maille propre, une section de fil constante et d'obtenir deux nappes de fils de carbone superposées et non enchevêtrées.

Le réseau de liage de l'armature de préférence non tissée est une armure constituée d'éléments de chaîne et d'éléments de trame, de préférence une armure présentant au moins l'une des caractéristiques suivantes:

    i. les jours du réseau de liage sont réguliers; cette régularité géométrique étant de préférence qualifiée comme suit dans un test **TR** de régularité géométrique défini dans la description :

    Ecart-type en % par rapport à la moyenne des surfaces d'un panel aléatoire de 20 jours 5 du réseau de liage d'un échantillon de grille de 40x40 cm est inférieur ou égal à 4%, de préférence à 3%, et, plus préférentiellement encore, 2 %;

    ii. les éléments de chaîne et les éléments de trame de cette armure sont parallèles respectivement aux fils de chaîne et aux fils de trame de l'armature,

iii. les entrecroisements de cette armure sont disposés (en vue de face) dans les jours de l'armature.

L'armure formant le réseau de liage de l'armature, est à pas de gaze; chaque élément de chaîne de cette armure comprenant deux fils de liage, et chaque élément de trame de cette armure comprenant un fil de liage.

L'armure pas de gaze est une armure dans laquelle les deux fils de chaine se croisent autour du fil de trame, ce qui apporte une excellente stabilité aux points de croisement.

Suivant une variante intéressante de l'invention, la grille peut être associée à un système de protection contre la corrosion des armatures métalliques de l'ouvrage en béton à consolider. Ces moyens peuvent être des fils métalliques revêtus d'oxydes métalliques mixtes (" Mixed Metal Oxides - MMO-"), destinés à former des électrodes aptes à permettre une action électrochimique contre la corrosion des armatures du béton armé de l'ouvrage à consolider.

Ces fils métalliques MMO pourraient être des fils de liage.

Dans le réseau de liage:

- chaque élément de chaîne de l'armure comprend deux fils de liage de chaine et chaque élément de trame de l'armure comprend un fil de liage de trame,
- l'un des deux fils de liage passe d'un même côté C1 de tous les fils de trame de l'armature,
- l'autre fil de liage de chaine passe d'un même côté C2 opposé à C1 de tous les fils de trame de l'armature,
- entre deux fils de trame successifs de l'armature, les fils de liage de chaine se croisent avant le fil de liage de trame, passent de part et d'autre du fil de liage de trame puis se recroisent pour enserrer le fil de trame de l'armature.

Conformément à des modalités intéressantes de l'invention, Les fils de liage présentent au moins l'une des caractéristiques suivantes :

i. Les fils de liage sont à base d'un ou plusieurs matériaux choisis dans le groupe comprenant-ou mieux encore constitué par- le carbone, le verre, le basalte, les métaux, les matériaux végétaux, avantageusement sélectionnés dans le sous-groupe comprenant-ou mieux encore constitué par- le chanvre, les matériaux synthétiques, avantageusement sélectionnés dans le sous-groupe comprenant-ou mieux encore constitué par- l'aramide, le poly [benz(1 ,2-D:5,4-D')bisoxazole-2,6-diyl-1 ,4-phenylène], le polyéthylène, le polypropylène, les polyamides, les polyimides, les polyesters;

le verre étant préféré;

ii. Le titre (en tex) des fils de liage formant les éléments de chaîne est compris dans les intervalles suivants -selon un ordre croissant de préférence-: [5-100] ; [10-60]; [15-50] ; [20-40];

iii. Le titre (en tex) des fils de liage formant les éléments de trame est compris dans les intervalles suivants -selon un ordre croissant de préférence-: [10-200] ; [30-150]; [40-100] ; [50-80];

iv. Le titre (en tex) des fils de liage formant les éléments de chaîne est égal 50 +/- 20 % du titre (en tex) des fils de liage formant les éléments de trame.

Dans le mode préféré de réalisation de la grille selon invention, les fils de liage sont en verre (type E). Ces fils de liage ont une bonne résistance à la traction. Ils sont sélectionnés conformément à l'invention, de telle sorte qu'ils ne cassent lorsqu'ils sont mis en tension au moment du tissage de la grille. En outre, ils sont imputrescibles et ininflammables.

Dans un mode préféré de réalisation:

- Chaque élément de chaîne est avantageusement formé, par deux fils de liage, par exemple de 34 tex chacun et de référence commerciale ECG 75.
- Chaque élément de trame est avantageusement formé par un fil de liage, par exemple de 68 tex et de référence commerciale ECG 150.

Cette configuration 2 fils de liage dans le sens chaîne/1 fil de liage dans le sens trame de tex égale à la somme des tex des 2 autres fils permet d'éviter les tensions dans le reste de l'armature et d'avoir de la régularité au niveau de la géométrie des mailles.

Les fils de liage viennent en partie obstruer les mailles de l'armature non tissée. Il est donc préférable que les fils de liage soient les plus fins possibles, pour limiter l'obstruction de ces mailles et permettre ainsi à la matrice de passer au travers de la grille. Cela optimise l'ancrage de la matrice dans la grille et les caractéristiques mécaniques du système matrice/grille, notamment au regard de la résistance au cisaillement.

La fabrication de cette grille est avantageusement réalisée à l'aide de moyens conventionnels et connus en eux-mêmes.

*MATRICE*

La matrice durcissable peut être minérale et/ou organique.

Une matrice durcissable comprend de préférence un ou plusieurs liants minéraux et/ou organiques.

Dans un mode préféré de réalisation, la matrice durcissable comprend (en parties en poids):

- 100 de liant;
- 1 - 4000, et dans un ordre croissant de préférence, 5 - 2000 ; 10 - 1000 ; 20 - 500 de charges minérales ;
- 0,01 - 1000, et dans un ordre croissant de préférence, 0,05 - 800 ; 0,1 - 500 ; 0,5 - 200 ; 1 - 50 d'au moins une résine;
- 0 - 500 d'additifs, et préférentiellement 0,01 - 50.

Liant

Ce liant est de préférence minéral, et, plus préférentiellement encore, est choisi seul ou en combinaison dans le groupe comprenant -idéalement constitué de - :

(i) les ciments de portland, les ciments de laitier, les ciments géopolymères, les pouzzolanes naturelles, les cendres volantes, les laitiers, les ciments supersulfatés, les sulfates de calcium (gypse, hémihydrate et/ou anhydrite), les chaux (vive, éteinte et/ou hydraulique), les silicates de potassium, sodium et/ou lithium, et leurs mélanges;

(ii) les ciments à base d'aluminate de calcium (CAC) et/ou à base de sulfo-aluminate de calcium (CSA) et leurs mélanges;

(iii) et leurs mélanges

Dans un mode préféré de réalisation de la matrice selon l'invention, le liant est au moins en partie constitué de ciment.

Selon une variante, le liant est au moins en partie organique, choisi dans le groupe comprenant -idéalement constitué par- : les (co)polymères époxy, les (co)polyuréthanes, et leurs mélanges.

Charges minérales

Avantageusement, le D50 de ces charges minérales est inférieur ou égal à 1000 μm; et, de manière plus avantageuse, inférieure ou égale à 800 voire à 700 μm.

Ces charges minérales sont de préférence choisies dans le groupe comprenant - idéalement constitué par - :

(i) le sous-groupe comprenant ou mieux encore constitué par : les fillers et/ou les sables, de préférence parmi les sables siliceux, calcaires, silico-calcaires, magnésiens et leurs mélanges, les fillers siliceux, calcaires et silico-calcaires, magnésiens et leurs mélanges, et/ou parmi les oxydes métalliques, les alumines, et/ou parmi les billes de verre et les minéraux silicatés naturels et synthétiques de préférence choisis parmi les argiles, micas, métakaolins, fumées de silice et leurs mélanges ;

(ii) le sous-groupe des charges légères choisies comprenant ou mieux encore constitué par : la perlite expansée, la vermiculite expansé, les aérogels de silice, le polystyrène expansé, les cénosphères (fillites), les billes creuses d'alumine, les argiles expansées, les ponces, les billes de verre creuses (type 3M®) ou les granulés de verre expansés (Poraver®, Liaver®), les grains de mousse de silicate, la rhyolithe (Noblite®);

(iii) et leurs mélanges.

Résines

Ces résines sont choisies dans le groupe comprenant -idéalement constitué par - :

**(i)** Les résines copolymères insaturées;

**(ii)** Les résines poudres redispersibles du sous-groupe comprenant ou mieux encore constitué par les familles des résines homo ou copolymères acryliques, copolymères de vinylacétate-éthylène, copolymères styrène-acrylique, les terpolymères d'acétate de vinyle, de versatate de vinyle et de dialkylester d'acide maléique, les copolymères d'acétate de vinyle et versatate de vinyle, les copolymères de styrène et butadiène, et leurs mélanges ;

**(iii)** et leurs mélanges

Ces résines visent à augmenter l'adhérence et l'élasticité.

A titre d'exemples préférés, on peut citer les copolymères de Vinylacétate-Ethylène.

Additifs

Avantageusement, la matrice selon l'invention comprend au moins l'un des additifs suivants : un retardateur de prise, un accélérateur de prise, un rétenteur d'eau, un hydrofugeant, un colorant, des fibres, un anti-mousse, un agent rhéologique, un agent entraineur d'air ou agent moussant, un agent générateur de gaz, un ignifugeant.
De préférence, cette matrice durcissable, présente au moins l'une des caractéristiques suivantes s'agissant des additifs:

- le retardateur de prise est de préférence choisi dans le groupe comprenant ou mieux encore constitué par les agents chélatants du calcium, les acides carboxyliques et leurs sel, les polysaccharides et leurs dérivés, les phosphonates, les lignosulphonates, les phosphates, les borates, et les sels de plomb, zinc, cuivre, arsenic et antimoine, et plus particulièrement parmi l'acide tartrique et ses sels, de préférence ses sels de sodium ou de potassium, l'acide citrique et ses sels, de préférence son sel de sodium (citrate trisodique), les gluconates de sodium; les phosphonates de sodium ; les sulfates et leurs sels de sodium ou de potassium, et leurs mélanges ;
- l'accélérateur de prise est choisi dans le groupe comprenant ou mieux encore constitué par les sels alcalins et alcalino-terreux d'hydroxydes, d'halogénures, de nitrates, de nitrites, de carbonates, de thiocyanates, de sulfates, de thiosulfates, de perchlorates, de silice, d'aluminium, et/ou parmi les acides carboxyliques et hydrocarboxyliques et leurs sels, les alcanolamines, les composés insolubles silicatés tels les fumées de silices, cendres volantes ou pouzzolanes naturelles, les ammonium quaternaires silicatés, les composés minéraux finement divisés tels les gels de silice ou les carbonates de calcium et/ou de magnésium finement divisés, et leurs mélanges; cet accélérateur de prise complémentaire (e) étant de préférence choisi dans le groupe comprenant ou mieux encore constitué par parmi les chlorures et leurs sels de sodium ou calcium ; les carbonates et leurs sels de sodium ou lithium, les sulfates et leurs sels de sodium ou de potassium, les hydroxydes et formiates de calcium et leurs mélanges ;
- le rétenteur d'eau est choisi dans le groupe comprenant ou mieux encore constitué par les polysaccharides et de préférence les éthers de cellulose ou d'amidon et leurs mélanges, et de préférence dans le groupe comprenant les méthylcelluloses, les hydroxyéthylcelluloses, les méthylhydroxypropylcelluloses, les méthylhydroxyéthylcelluloses et leurs mélanges, ou parmi les éthers de guar modifiés ou non et leurs mélanges ou le mélange de ces différentes familles ;
- l'hydrofugeant est choisi dans le groupe comprenant ou mieux encore constitué par les agents fluorés, silanisés, siliconés, siloxanés, les sels métalliques d'acides gras et leurs mélanges, de préférence parmi les sels de sodium, potassium et/ou magnésium des acides oléique et/ou stéarique et leurs mélanges;
- le colorant est choisi dans le groupe comprenant ou mieux encore constitué par les pigments organiques et/ ou minéraux, et plus particulièrement parmi les oxydes de fer, de titane, de chrome, d'étain, de Nickel, de Cobalt, de Zinc, d'antimoine, et/ou parmi les aluminosilicates de sodium polysulfurés, le carbone, les sulfures de cobalt, de manganèse, de zinc, et/ou parmi les pigments à haute transparence ou haute réflectance aux infra-rouges et leurs mélanges ;
- Les fibres comprennent des fibres minérales, animales, végétales et synthétiques, plus particulièrement choisies dans le groupe comprenant ou mieux encore constitué par les fibres de polyamide, de polyacrylonitrile, de polyacrylate, de cellulose, de polypropylène, d'alcool polyvinylique, de verre, métalliques, de lin, de polycarbonate, de sisal, de jute, de chanvre et des mélanges de ces fibres ;
- L'anti-mousse est choisi dans le groupe comprenant ou mieux encore constitué par les polyols de polyéther, les molécules hydrocarbonées, les molécules siliconés, esters hydrophobes, les tensioactifs non ioniques, les polyoxiranes, et leurs mélanges ;
- L'agent rhéologique est choisi dans le groupe comprenant ou mieux encore constitué par les agents épaississants, les agents fluidifiants (minéraux et/ou organiques) et leurs mélanges, et préférentiellement dans le sous-groupe comprenant ou mieux encore constitué par les polysaccharides et leurs dérivés, les alcools polyvinyliques, les épaississants minéraux, les polyacrylamides linéaires, les polynaphtalènes sulfonates, les polymélamines sulfonates, les polycarboxylates et leurs mélanges ;
- Les agents entraineurs d'air ou agents moussants sont choisis parmi :

  i. les sources de surfactants anioniques de type par exemple, alkyl sulfates, alkyl ether sulfates, alkaryl sulfonates, les alkylsuccinates, alkylsulpho succinates, alkoyl sarcosinates, alkyl phosphates, alkylether phosphates, alkylether carboxylates, et alpha olefine sulfonates , préférentiellement le lauryl sulfate de sodium,
  ii. Les surfactants non ioniques de type alcools gras ethoxylés, mono ou di alkyl alkanolamides, les alkyl polyglucosides,
  iii. Les surfactants amphotériques de type alkyl amine oxides, alkyl betaines, alkyl amido propylbétaines, alkylsulphobétaines, alkylglycinates, alkyl amphopropionates, alkyl amidopropylhydroxysultaines.

- Les générateurs de gaz in situ sont choisis parmi les produits qui génèrent au contact de la matrice du système suivant l'invention, de l'oxygène, de l'hydrogène, de l'azote, du monoxyde ou dioxyde de carbone, de l'ammoniac, du méthane. Ils peuvent être choisis parmi les adjuvants décrits dans US 7, 288,147 et en particulier dans les familles des azodicarbonamide, sodium bicarbonate, peroxydes organiques ou inorganiques, toluène sulfonyl hydrazide, benzène-sulfonyl-hydrazide, toluène-sulfonyl-acétone-hydrazone, toluène sulfonyl-semicarbazide, phenyltétrazole, sodium-borohydride, dinitrosopentaméthylènetetramine ;

- Les ignifugeants sont de préférence choisis dans le groupe comprenant ou mieux encore constitué par les agents retardateurs de flammes ayant des actions chimiques et/ou physiques, les retardateurs de flamme halogénés, les retardateurs de flamme phosphorés, les retardateurs de flamme azotés, les systèmes intumescents, les retardateurs de flamme minéraux, les hydroxydes métalliques, les composés de zinc, les borates, les oxydes d'antimoine, les nanocomposites basés sur les argiles à base de silicates d'aluminium, et leurs mélanges ;
de préférence dans le sous-groupe comprenant ou mieux encore constitué par le TétrachlorobisphénolA (TBBPA), les chloroparaffines, les phosphates organiques, le phosphore rouge, les phosphonates, les phosphinates, la mélamine, ses sels et homologues, les hydroxydes d'aluminium ou de magnésium, les hydroxystannates de zinc, le borate de zinc, et leurs mélanges.

Ces additifs ont pour rôle d'offrir une régularité des propriétés du matériau et permettent de remplir le cahier des charges précis propre à chaque application de la composition (*e.g.* cimentaire) sèche : mortier, enduit, colle.

Les retardateurs de prise et les accélérateurs de prise complémentaires sont des produits qui modifient les solubilités, les vitesses de dissolution et d'hydratation des divers constituants de la composition cimentaire sèche.

Le rétenteur d'eau a la propriété de conserver l'eau de gâchage avant la prise. L'eau est ainsi maintenue dans la pâte, de mortier ou béton, ce qui lui confère une très bonne adhérence et une bonne hydratation. Dans une certaine mesure, elle est moins absorbée sur le support, le relargage en surface est limité et on a ainsi peu d'évaporation.

L'hydrofugeant vise à diminuer la pénétration de l'eau dans la composition sèche ou le produit durci. A titre d'exemple, on peut citer l'oléate de sodium ou le stéarate de magnésium.

Le colorant vise à donner au produit durci la teinte désirée. A titre d'exemple, on peut citer l'oxyde de fer $Fe_2O_3$ ou le dioxyde de titane $TiO_2$.

Les fibres visent à améliorer les résistances mécaniques du produit durci. A titre d'exemple, on peut citer les fibres de polyacrylonitrile.

Les anti-mousses sont utilisées afin d'augmenter la cohésion du mortier par limitation de la présence de bulles d'air. Ils permettent de réduire l'effet secondaire d'autres additifs ou conséquent au malaxage, entraînant de l'air. A titre d'exemple d'anti-mousse, on peut citer les polyols de polyether.

Les agents rhéologiques visent à modifier la consistance du produit humide pour l'adapter à son application. A titre d'exemples, on peut citer les sépiolites, les gommes de xanthane ou la fumée de silice.

Les agents moussants visent à apporter de la porosité supplémentaire par entrainement d'air lors du gâchage du liant minéral.

Les agents générateurs de gaz in situ visent à apporter de la porosité supplémentaire par génération d'air un situ lors du gâchage du liant minéral.

Les ignifugeants protègent le produit durci contre le feu.

*STRUCTURE COMPOSITE DURCIE*

L'invention a aussi pour objet la structure composite durcie obtenue à partir du système selon l'invention tel que défini dans la description, l'exemple et les figures.

Cette structure composite durcie a une température de service, qui correspond à la température moyenne d'un élément de structure, résultant des températures climatiques en hiver ou en été et des températures d'exploitation telle que définie par la Norme NF EN 1991-1-5 au paragraphe 5.2. Cette température peut atteindre par exemple au moins 80°C.

L'invention vise également une structure composite ayant un module de traction élastique MTE inférieur ou égal à -en MPa et selon un ordre croissant de préférence-100.000, 80.000, 70.000, ainsi que l'utilisation d'une telle structure, pour augmenter la résistance aux charges sismiques d'un ouvrage en béton armé ou de maçonnerie, ladite structure étant obtenue à partir d'un système composite de consolidation d'ouvrages, comprenant une matrice durcissable ou durcie et une grille de renfort textile, dans lequel la grille comprend au moins une couche formée d'une armature constituée de fils de chaîne et de fils de trame plats et présente une stabilité dimensionnelle sous contrainte des mailles de l'armature, avant l'application de la grille sur l'ouvrage à consolider.

*PROCEDE DE CONSOLIDATION D'OUVRAGES NOTAMMENT DE BETON ARME OU DE MAÇONNERIE*

Selon un autre de ses aspects, l'invention concerne la mise en œuvre du système comprenant la grille selon invention et la matrice cimentaire, pour consolider un ouvrage notamment de béton armé ou de maçonnerie, tel que le mur d'un bâtiment, un tunnel, une canalisation, un pilier de pont, etc.

C'est ainsi qu'est visé un procédé de consolidation d'ouvrages en béton armé ou de maçonnerie caractérisé en ce qu'il consiste essentiellement à maroufler la grille telle que définie dans la présente description, l'exemple et les figures, sur l'ouvrage avec la matrice telle que définie dans la présente description, l'exemple et les figures, éventuellement après avoir mélangé ladite matrice avec un liquide, de préférence de l'eau, pour obtenir une matrice humide durcissable.

Plus précisément, la matrice humide durcissable est avantageusement projetée sur l'ouvrage, de préférence au moyen d'une pompe, on positionne ensuite la grille sur la matrice non durcie et on procède au marouflage, de préférence à l'aide d'une lisseuse, et éventuellement on renouvelle au moins une fois la projection de matrice, de préférence en lissant la surface de la matrice ainsi projetée avec la lisseuse.

Suivant une possibilité de mise en œuvre, on répète n fois les opérations de projection, de positionnement d'une nouvelle grille et de marouflage, avec n compris entre 1 et 3; ces opérations pouvant être effectuées sur la surface de la matrice précédemment projetée non durcie ou au moins en partie durcie.

En pratique, on procède tout d'abord au gâchage de la formulation sèche de la matrice cimentaire, avec un liquide, préférentiellement de l'eau.

Les taux de gâchage sont par exemple compris entre 10 et 30 %.

On met en œuvre la grille selon l'invention, en faisant en sorte que le sens chaîne de la grille soit disposée dans l'axe de la contrainte que l'on veut diffuser.

On applique une couche de mortier sur la zone à renforcer de l'ouvrage, soit manuellement soit de manière mécanisée, on positionne la grille que l'on maroufle dans la couche de mortier, par exemple à l'aide d'une lisseuse puis on finalise le système composite par application d'une ultime couche (application mécanique ou manuelle).

Cette opération peut être renouvelée de préférence jusqu'à trois fois par superposition.

## FORMULATION HUMIDE ET SON PROCEDE DE PREPARATION

Selon un autre de ses aspects, mais qui n'est pas revendiqué, l'invention concerne une formulation humide pour le bâtiment où elle comprend la matrice selon l'invention, mélangée à un liquide, de préférence de l'eau.

Selon un autre de ses aspects, mais qui n'est pas revendiqué l'invention concerne un procédé de préparation de la formulation humide selon l'invention, où il consiste essentiellement à mélanger un liquide, de préférence de l'eau à tout ou partie des composants de la matrice selon l'invention, le reste des composants étant ensuite incorporé progressivement dans le mélange si cela n'a pas été fait auparavant.

## UTILISATION DE LA GRILLE SELON INVENTION

Selon un autre de ses aspects, l'invention concerne l'utilisation d'une grille selon l'invention pour consolider un ouvrage notamment de béton armé ou de maçonnerie, par marouflage à l'aide d'une formulation humide selon invention.

## OUVRAGES DE BATIMENT OU DE GENIE CIVIL

L'invention concerne aussi des ouvrages de bâtiment ou de génie civil consolidés à l'aide du système selon l'invention, après gâchage avec un liquide (de préférence de l'eau) de la matrice sous forme de composition sèche conforme à l'invention, pour obtenir une formulation humide selon l'invention, utilisée pour appliquer, au moins une fois par marouflage, la grille selon invention.

D'autres détails et caractéristiques avantageuses de l'invention ressortiront ci-après de la description d'un exemple d'un mode préféré non limitatif de réalisation de l'invention, en référence aux figures annexées dans lesquelles :

- La figure 1 est une photographie en perspective d'un mode préféré de réalisation de la grille suivant l'invention
- la figure 2 est une vue schématique de détail de la figure 1.
- la figure 3 est une vue en coupe selon la ligne de coupe III-III de de la figure 2.
- La figure 4 est une vue de l'échantillon de grille suivant l'invention destiné à être soumis au **test TS** de stabilité dimensionnelle sous contrainte.
- la figure 5 est une photographie de détail d'une étape de fabrication de la grille suivant l'invention dans le métier à tisser utilisée à cette fin.
- la figure 6 est une photographie d'une autre étape de fabrication de la grille suivant l'invention, à savoir l'enduction.
- La figure 7 est une photographie de face de la grille suivant l'invention.

- La figure 8 montre dans sa partie gauche une vue en perspective de l'éprouvette utilisée dans un test de comportement en traction uniaxiale quasi-statique, du système composite selon l'invention, dans sa partie droite une vue en perspective de l'éprouvette pourvue à chacune de ces 2 extrémités d'une jonction avec la machine de test, et dans sa partie centrale d'un détail de cette jonction.
- La figure 9 est une courbe contrainte moyenne de traction (MPa) en fonction de la déformation (mm/mm) dans un test de comportement en traction uniaxiale quasi statique, du système composite selon l'invention.
- La figure 10 montre dans sa partie supérieure une vue en perspective et dans sa partie inférieure une vue de côté, de l'éprouvette utilisée dans un test de stabilité en température du système composite selon l'invention.
- La figure 11 est une courbe montrant l'évolution de la rigidité pour des éprouvettes du type de celle montrée sur la figure 8 et permettant l'étude exploratoire en fatigue du système composite de renforcement grille/matrice selon l'invention.
- La figure 12 montre un adhéromètre de type SATEC utilisé dans une évaluation de la cohésion superficielle du système composite selon l'invention, sur un support béton.
- La figure 13 montre un schéma d'un bâti de flexion utilisé dans des tests de mesure du moment fléchissant sur des poutres en flexion renforcées par le système composite selon l'invention.
- La figure 14 montre des courbes de la charge (daN) en fonction de la flèche (mm) mesurée pour des poutres renforcées ou non par le système composite selon invention et soumises au test du moment fléchissant.
- La figure 15 montre les courbes de la charge (N) en fonction de la flèche (mm) obtenues dans un test de mesure du comportement de poutres en béton armé, renforcées ou non vis-à-vis de l'effort tranchant, par un système composite selon l'invention.
- La figure 16 montre l'identification des paramètres de caractérisation mécanique de la structure composite durcie, en particulier le module de traction élastique MTE.

Le système composite de consolidation d'ouvrages, notamment de béton armé ou de maçonnerie, selon l'invention comprend une matrice durcissable ou durcie et une grille de renfort textile.

## -I- GRILLE

**Structure :**

La grille porte la référence 1 sur les figures. Elle est assimilable à un treillis composé d'une armature non tissée 2 et d'un réseau 3 de liage de cette armature 2.

Cette dernière est constituée de fils de chaîne $2°c$ plats en carbone qui s'entrecroisent avec des fils de trame $2°t$ plats également carbone.

Le réseau 3 de liage est une armure comportant des éléments de chaîne $3°c$ et des éléments de trame $3°t$.

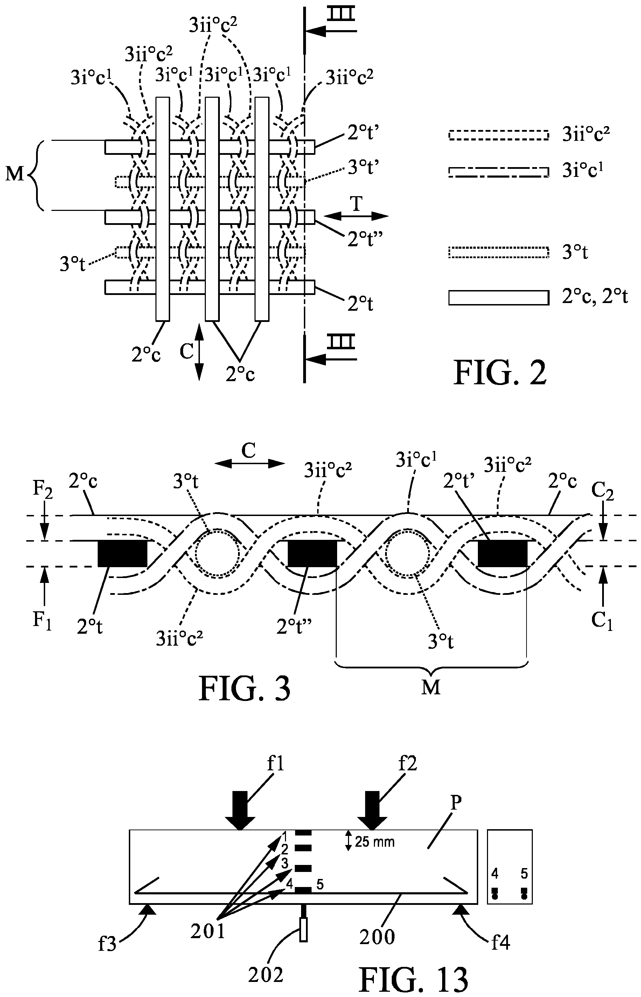

Les fils de chaîne $2°c$ et les fils de trame $2°t$ de l'armature non tissée 2, sont superposés et perpendiculaires. La nappe formée par les fils de chaîne $2°c$ peut être qualifiée d'inférieure car elle est destinée à être appliquée sur l'ouvrage à consolider, tandis que la nappe supérieure est formée par les fils de trame $2°t$, lesquels ont par convention dans le présent exposé une Face F1 et une Face F2 montrées sur la figure 3.

Les fils de chaîne $2°c$ sont, dans cet exemple, simplement posés sur les fils de trame $2°t$. Ils ne sont pas solidarisés les uns aux autres au niveau de leurs zones de contact. La cohésion et la régularité géométrique de l'armature 2 sont assurées, de préférence seulement, par le réseau de liage 3. Selon des variantes de l'invention, une liaison pourrait être prévue entre les fils de chaîne $2°c$ et les fils de trame $2°t$, au niveau de tout ou partie de leurs zones de contact par exemple collage et/ou soudage.

La disposition perpendiculaire des fils de chaîne $2°c$ et des fils de trame $2°t$ est aussi une préférence, mais l'angle entre la chaîne et la trame pourrait être différent de 90°, par exemple compris entre 30° et 120°, 90° exclu.

Le quadrillage défini par les fils de chaîne $2°c$ et de trame $2°t$ délimite des jours 4 (cf. fig. 1 et 7) de forme sensiblement rectangulaire dans cet exemple, mais qui pourraient être en losange si l'angle chaîne/trame de l'armature diffère de 90°.

Chaque fil de chaîne $2°c$ et de trame $2°t$ est constitué par un faisceau plat de N filaments de carbone. Dans cet exemple de réalisation préféré:

- N est sensiblement égal à 12000 (800 tex).
- La résistance à la traction (en MPa) de chaque fil est sensiblement de 4900.
- Le module de traction (en GPa) de chaque fil est sensiblement de 230.
- L'allongement (en %) de chaque fil est sensiblement de 2,1.
- Le diamètre filament est sensiblement de 7 $\mu$m.
- La densité du filament est sensiblement de 1,8.

Les fils de chaîne 2°c et de trame 2°t sont de préférence identiques dans cet exemple, mais il n'est pas exclu de mettre en œuvre des fils de chaîne 2°c différents entre eux et/ou des fils de trame 2°t identiques ou différents entre eux.

Ces fils de l'armature peuvent correspondre notamment aux fils de carbone commercialisés par la société TORAY CARBON FIBERS EUROPE sous la dénomination FT300, T300, T300J, T400H, T700S, T700G, T800H, M35J, M40J, M46J, M55J, M60J, M30S, M40, T1000G, M50J, T600S, ou T800S.

Les éléments de chaîne 3°c et les éléments de trame 3°t du réseau de liage 3 forment ensemble une armure dans laquelle chaque élément de chaîne 3°c comprend deux fils de liage $3i°c$, $3ii°c$ de chaîne et chaque élément de trame 3°t comprend un fil 3°t de liage de trame. L'armure du réseau de liage 3 est une armure à pas de gaze ou armure leno. Comme cela ressort plus nettement des figures 2&3, les deux fils de liage $3i°c$ de chaîne cheminent tout au long de la chaîne selon le motif M récurrent suivant montré sur la figure 3 :

- l'un des fils de liage $3i°c^1$ de chaîne passe sur la Face F1 d'un fil de trame 2°t' de l'armature 2, et l'autre fil de liage $3ii°c^2$ de chaîne passe sur l'autre Face F2 dudit fil de trame 2°t' de l'armature 2, de manière à enserrer ce dernier;
- les deux fils de liage $3i°c^1$ & $3ii°c^2$ de chaîne se croisent une première fois dans le jour 4 délimité par un segment du fil de trame 2°t', par un segment opposé du fil de trame suivant 2°t'' dans le sens de la chaine C sur les figures 2 & 3 et par les deux segments en regard des deux fils de trame 2°c contigus correspondants de l'armature 2, ledit jour 4 étant traversé par un fil de liage 3°t de trame, de sorte que, après s'être croisés une 1ère fois, les deux fils de liage $3i°c^1$ & $3ii°c^2$ de chaîne passent de part et d'autre du fil de liage 3°t de trame, puis se recroisent une deuxième fois dans le susdit jour 4, pour qu'ensuite le fil de liage $3i°c^1$ de chaîne passe sur la Face F1 du fil de trame suivant 2°t'' et le fil de liage $3ii°c^2$ de chaîne passe sur la Face F2 du fil de trame suivant 2°t''.

Les éléments de chaîne 3°c croisent les fils de trame 3°t du réseau de liage 3 dans les jours 4 de l'armature 2, et définissent ainsi eux aussi des jours 5 réguliers (cf. fig. 7). Les éléments de chaîne 3°c sont sensiblement perpendiculaires aux fils de trame 3°t du réseau de liage 3. Les éléments de chaîne 3°c du réseau de liage 3 sont sensiblement parallèles aux fils de chaîne 2°c de l'armature et les éléments de trame 3°t du réseau de liage 3 sont sensiblement parallèles aux fils de trame 2°t de l'armature 2.

Les fils de carbone 2°t de l'armature 2 dans le sens trame sont immobilisés par le réseau de liage 3, ce qui assure une régularité géométrique de l'ensemble.

Selon une variante envisageable, les éléments de trame 3°t du réseau de liage 3 pourraient comprendre, comme les éléments de chaîne 3°c, deux fils de liage de trame propres à emprisonner les fils de chaîne 2°c de l'armature 2. Cela renforce encore la cohésion, la résistance à la déformation sous contrainte et la régularité de l'armature 2.

Chaque fil de chaîne $3i°c$, $3ii°c$ et de trame 3°t est, de préférence, constitué par un fil de verre. Dans cet exemple de réalisation préféré, le titre (en tex) de ce fils de liage en verre de chaîne est de 35 +/- 5, le titre (en tex) des fils de liage en verre de trame est de 75+/- 5. Ce titre de 38 tex en chaîne représente 51 % du titre de 75 tex en trame.

Ces fils de liage en verre peuvent correspondre aux produits commercialisés par la société FULLTECH FIBER GLASS CORPORATION sous la dénomination ECG 75 1/0 0.7Z 172 SIZING ( A-GRADE ) et/ou ECG 150 1/0 0.7Z 172 SIZING ( A-GRADE ).

La grille suivant l'invention peut être appliquée indifféremment avec les fils de trames ou de chaines dans l'axe de la contrainte à répartir (diffuser) (les fils de carbone de la trame et de la chaine ont une performance quasi équivalente vis-à-vis de la reprise d'effort)

De ce fait le renfort peut être appliqué pour " reprendre " des efforts de flexion et des efforts dits " tranchants ".

**Fabrication : tissage/enduction-imprégnation**

La grille 1 composée de l'armature 2 non tissée en fils 2°c, 2°t (e.g. de carbone) renforcée par le réseau de liage 3, est fabriquée comme indiqué ci-après par exemple à l'aide d'un métier à tisser, la réalisation de l'armature 2 et le tissage sur cette armature 2, des fils $3i°c1$, $3ii°c2$ et 3°t (e.g. de verre) selon une armure pas de gaze du réseau de liage 3.

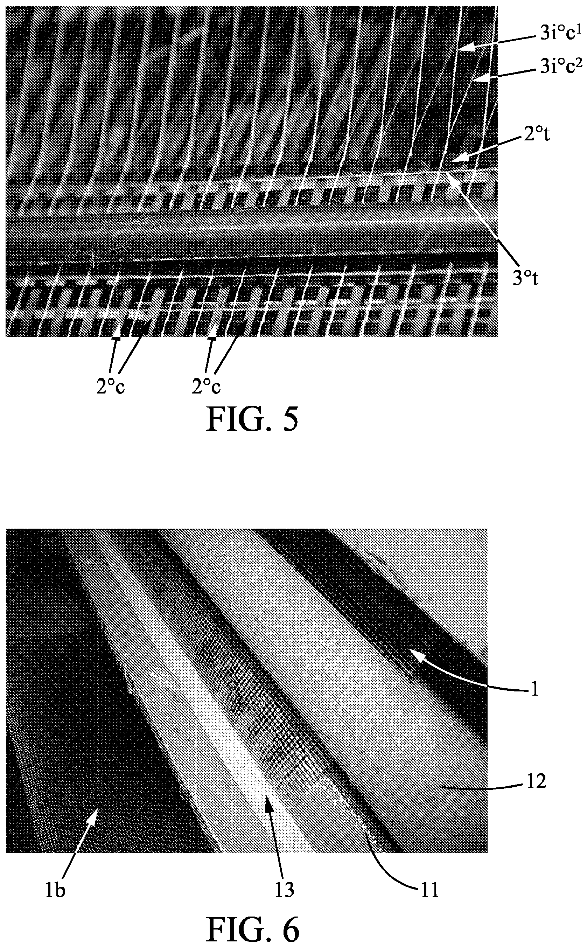

La figure 5 montre un détail du métier à tisser, et en particulier les fils de liage de chaîne $3i°c1$, $3ii°c2$, juste après qu'ils se croisent, avant qu'ils ne viennent envelopper ainsi un fil de trame 3°t de liage (non encore engagé dans le métier à tisser et n'apparaissant pas sur la figure 5), pour se croiser à nouveau ensuite et pour après envelopper un fil de trame 2°t de l'armature 2 (non encore engagé dans le métier à tisser et n'apparaissant pas sur la figure 5).

L'utilisation des deux fils de liage de chaine et du fil de liage de trame permet de rendre "géométriquement" solidaires les fils de carbone de trame des fils de carbone de la chaine.

De plus, ce type de liage induit une tension régulière dans la grille (sens chaine et trame) ce qui permet une répartition égale des fils en tous sens. La géométrie de chaque jour 4 de l'armature 2 ou jour 5 du réseau de liage 3 est très régulière.

La grille selon cet exemple de réalisation est enduite par imprégnation e.g. avec une résine acrylique pure dont la température de transition vitreuse est 25°C, la température minimale de formation de film est de 14°C et dont l'extrait sec est de 46%.

Cette enduction/imprégnation permet d'assurer et de renforcer la stabilité dimensionnelle de l'ensemble et la répartition homogène des contraintes. Cela garantit une collaboration efficace de l'ensemble des filaments constituant les fils 2°c de carbone de la chaîne de l'armature 2. L'enduction/imprégnation agit comme un "fixateur" qui permet à la grille de résister efficacement à la déformation. Ceci permet une répartition homogène des contraintes sur la surface de la grille et dans chaque fil de carbone et facilite leur dissipation.

La grille est de préférence et comme l'illustre cet exemple, fabriquée en continu, ce qui permet une gestion efficace des tensions liées à la fabrication (métier à tisser).

Les fils sont tendus de manière homogène et constante, puis enduits par trempage.

La figure 6 montre la grille 1b non enduite en cours de circulation dans les rouleaux 11,12 de la machine d'enduction, l'un de ces rouleaux 11 étant associé à une racle dont l'un des bords parallèles à l'axe du rouleau 11 est en contact avec la grille 1, de manière à former un réceptacle contenant un bain d'enduction 13 qui imprègne la grille 1 défilant et qui passe ensuite entre le rouleau d'enduction 11 et le contre rouleau 12, de manière à éliminer le liquide d'enduction en excès. La grille enduite 1 est séchée

Après ce séchage, la grille est collectée et conditionnée en rouleau.

La grille suivant l'invention peut être appliquée indifféremment avec les fils de trame ou de chaine dans l'axe de la contrainte à répartir (diffuser). Les fils de carbone de la trame et de la chaine ont une performance quasi équivalente vis-à-vis de la reprise d'effort). De ce fait, le renfort peut être appliqué pour " reprendre " des efforts de flexion et des efforts dits " tranchants".

## -II- TESTS TR ET TS

### -II.1- Test TS de stabilité dimensionnelle sous contrainte

#### II.1.1 Méthode

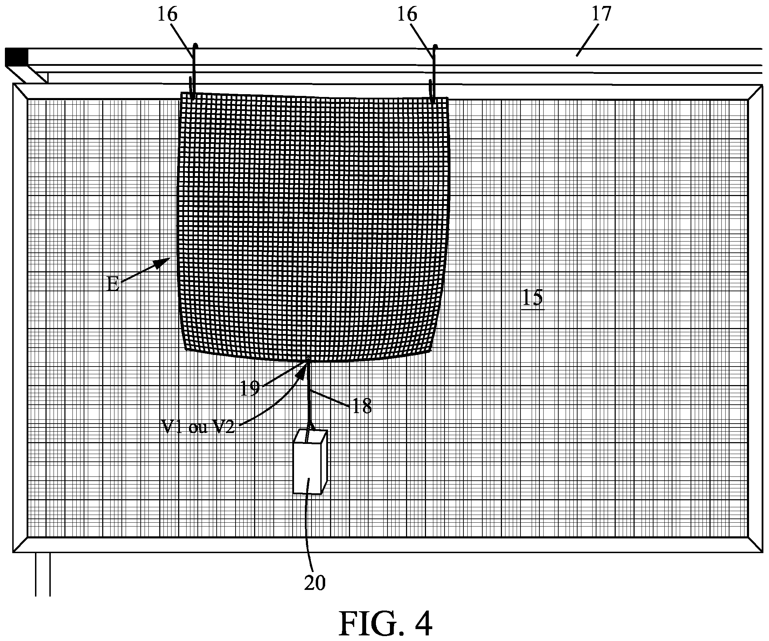

Ce test **TS** consiste à découper un échantillon E carré de grille de $40 \times 40$ cm dans un rouleau de grille 1. Cet échantillon E est montré sur la figure 4.

Comme cela apparaît sur la figure 4, l'échantillon E est accroché sur un tableau gradué 15 au moyen de deux crochets 16 sur une barre horizontale 17, de telle sorte que l'un des crochets 16 est fixé à une distance de 2,5 cm (à l'entraxe du plot d'attache collé sur la grille en partie haute) de l'un des coins supérieurs de l'échantillon E, et l'autre crochet à une distance de 2,5 cm du coin supérieur opposé (de l'axe du trou de fixation au bord extérieur de la grille). Chaque crochet 16 est constitué d'une tige filetée de diamètre 6 mm, pliée afin de former un crochet.

La barre est réalisée à partir d'un profil métallique en forme de « U » à l'envers qui est percé dans sa base. Le crochet 16 est rendu solidaire de la barre en forme de « U » car traversante et assurée par un système écrou / contre écrou.

Le bord supérieur de l'échantillon E est aligné sur l'axe horizontal correspondant à la graduation zéro du tableau gradué 15.

On repère le jour 4 médian compris dans la ligne terminale inférieure de jours 4 de l'échantillon E.

Ce jour 4 médian est celui le plus proche du centre de cette ligne terminale inférieure l'échantillon E.

On reporte sur le tableau gradué 15 la position du bord inférieur de l'échantillon E situé juste au-dessous du jour 4 médian. On lit la valeur V0 en cm, correspondant à la longueur entre la graduation zéro du tableau 15 gradué et la position du bord inférieur reporté sur le tableau gradué 15.

On accroche ensuite un poids 20 de 1 kg ou 2 kg au centre de l'échantillon E au moyen d'un crochet 18 comportant une partie terminale courbe 19 que l'on introduit dans le jour 4 médian.

Le crochet 18 est constitué d'un fil métallique plié en ses deux extrémités afin de former un double crochet d'arrimage de l'échantillon E vers le poids.

Aussitôt après avoir positionné le poids 20, on reporte sur le tableau gradué 15 la position du bord inférieur de l'échantillon E situé juste au-dessous du jour 4 ou 5 médian. On lit la valeur V1 en cm, correspondant à la longueur entre la graduation zéro du tableau 15 gradué et la position du bord inférieur reporté sur le tableau gradué 15.

On calcule sa déformation en cm D1 = V1 - V0 dans le cas où le poids 20 est de 1kg

On calcule sa déformation en cm D2 = V2 - V0 dans le cas où le poids 20 est de 2kg.

#### II.1.2 Résultats

$$V0 = 40 \text{ mm}$$

(suite)

V1 = 40 mm        D1 = 0

V2 = 40 mm        D2=0

### -II.2- Test TR de régularité géométrique

#### II.2.1 Méthode

Ce test **TR** consiste à découper un échantillon E carré de grille de 40x40 cm dans un rouleau de grille 1 tel qu'obtenu au sortir de la fabrication et qui n'a donc pas été déroulé ni manipulé. Cet échantillon E est montré sur la figure 4.

On calcule la surface sur un panel aléatoire de 20 jours de cet échantillon. Dans le cas d'un jour rectangulaire, comme c'est le cas dans le présent exemple préféré de réalisation, on mesure la longueur et la largeur de chaque jour et enfin les produits de ces 2 dimensions pour avoir la surface. Dans le cas d'une forme géométrique autre que rectangulaire, on effectue les mesures de dimensions et les calculs appropriés.

L'écart-type de la surface des jours de l'armature sur un panel aléatoire de 20 jours est calculé.

Les jours peuvent être les jours ou mailles 4 de l'armature 2 ou les jours ou mailles 5 du réseau de liage 3.

#### II.2.2 Résultats

#### II.2.2.1 Armature 2 en carbone

**Tableau 1**

| Mesures | Régularité géométrique de l'armature carbone 2 de l'échantillon E - Maille / jour 4 Figure 1 - | | |
| | | | |
| | Côté 1 (mm) | Côté 2 (mm) | Surface de maille (mm2) |
| 1 | 5,21 | 5,11 | 26,62 |
| 2 | 5,43 | 5,07 | 27,53 |
| 3 | 4,9 | 4,81 | 23,57 |
| 4 | 5,04 | 5,62 | 28,32 |
| 5 | 4,87 | 5,04 | 24,54 |
| 6 | 5,29 | 5,2 | 27,51 |
| 7 | 5,79 | 5,3 | 30,69 |
| 8 | 4,86 | 5,14 | 24,98 |
| 9 | 5,09 | 5,07 | 25,81 |
| 10 | 5 | 5,08 | 25,40 |
| 11 | 5,2 | 5,29 | 27,51 |
| 12 | 4,47 | 5,28 | 23,60 |
| 13 | 5,07 | 5,04 | 25,55 |
| 14 | 5,3 | 5,02 | 26,61 |
| 15 | 5,18 | 5,12 | 26,52 |
| 16 | 5,74 | 5,06 | 29,04 |
| 17 | 5,17 | 5,2 | 26,88 |
| 18 | 4,82 | 5,11 | 24,63 |
| 19 | 4,84 | 5,14 | 24,88 |

(suite)

| Mesures | Côté 1 (mm) | Côté 2 (mm) | Surface de maille (mm2) |
|---|---|---|---|
| **20** | 5,14 | 5,04 | 25,91 |
| | | | |
| **Moyenne (mm)** | 5,12 | 5,14 | / |
| **Moyenne (mm²)** | / | / | 26,31 |
| **Ecart-type (mm)** | **0,31** | **0,16** | **/** |
| **Ecart-type (mm²)** | / | / | **1,81** |
| **Ecart-type (% par rapport à la moyenne)** | **6,0** | **3,1** | **6,9** |

Les côtés 1 & 2 sont contigus.

La surface de maille est calculée comme suit : côté 1 $\times$ côté 2

**II.2.2.1 Réseau de liage 3 en verre**

**Tableau 2**

| | Régularité géométrique du réseau de liage 3 en verre de l'échantillon E - Maille / jour 5 Figure 7 - | | |
|---|---|---|---|
| | | | |
| Mesures | Côté 1 (mm) | Côté 2 (mm) | Surface de maille (mm2) |
| **1** | 7,33 | 7,28 | 53,36 |
| **2** | 7,47 | 7,47 | 55,80 |
| **3** | 7,32 | 7,27 | 53,22 |
| **4** | 7,26 | 7,35 | 53,36 |
| **5** | 7,38 | 7,38 | 54,46 |
| **6** | 7,35 | 7,45 | 54,76 |
| **7** | 7,47 | 7,36 | 54,98 |
| **8** | 7,37 | 7,21 | 53,14 |
| **9** | 7,27 | 7,41 | 53,87 |
| **10** | 7,42 | 7,37 | 54,69 |
| **11** | 7,36 | 7,48 | 55,05 |
| **12** | 7,37 | 7,58 | 55,86 |
| **13** | 7,44 | 7,38 | 54,91 |
| **14** | 7,29 | 7,36 | 53,65 |
| **15** | 7,42 | 7,34 | 54,46 |
| **16** | 7,39 | 7,24 | 53,50 |
| **17** | 7,44 | 7,33 | 54,54 |
| **18** | 7,39 | 7,35 | 54,32 |
| **19** | 7,42 | 7,43 | 55,13 |
| **20** | 7,38 | 7,44 | 54,91 |

(suite)

| Mesures | Côté 1 (mm) | Côté 2 (mm) | Surface de maille (mm2) |
|---|---|---|---|
| | | | |
| **Moyenne (mm)** | 7,38 | 7,37 | / |
| **Moyenne (mm$^2$)** | / | / | 54,40 |
| Ecart-type (mm) | 0,06 | 0,09 | / |
| Ecart-type (mm$^2$) | / | / | 0,83 |
| **Ecartype (% par rapport à la moyenne)** | **0,8** | **1,2** | **1,5** |

### -III- MATRICE CIMENTAIRE

- 1- Matières premières

    1.1 liant hydraulique :

        1.1.1. ciment portland de type CEM I 52.5N - SR5 CE PM - CP2, de masse volumique 3,17 g/cm$^3$ et de surface spécifique blaine 3590 cm$^2$/g.
        1.1.2. oxyde de calcium à 93% minimum de densité apparente de l'ordre de 1 et de granulométrie 0-100$\mu$m.

    1.2 résine :
    résine poudre redispersable à base de copolymère acrylate de densité 450 - 650 g/l, de pH 7-8, de température de transition vitreuse +10°C et de température minimum de formation du film +0°C (après redispersion dans l'eau).
    1.3 charges minérales :

        1.3.1 filler calcaire : carbonate de calcium naturel cristalllin pur (CaCO$_3$ $\geq$ 99%) de dureté Mohs 3, de prise d'huile 20 mL / 100 g (ISO 787-5) et de diamètre moyen 8 $\mu$m.
        1.3.2 charges siliceuses :

            1.3.2.1 sable siliceux de granulométrie 75-300 $\mu$m.
            1.3.2.2 sable siliceux de granulométrie 200-800 $\mu$m.

    1.4 additifs:

        1.4.1 épaississant : acide silicique amorphe de masse volumique 200 kg/m3 et de surface spécifique 18-22 m$^2$/g.
        1.4.2 rétenteur d'eau : méthylhydroxyéthylcellulose de viscosité rotovisko 20000-27000 mPa.s (en solution aqueuse à 2% / 20°C).

- 2- Mode opératoire :

    * 3 kg de poudre comprenant le liant, la résine, les charges minérales et les additifs sont préparés et mélangés 3 minutes sur mélangeur de laboratoire Guedu (modèle 4.5 NO) de capacité utile 3,5 litres à une vitesse comprise entre 545 et 610 tours/minute.
    * Les 3 kg de poudre obtenus sont gâchés sur malaxeur de laboratoire Perrier 1 minute à une vitesse de 140 tours/minute puis les parois du bol sont raclées et le mélange est poursuivi pendant 2 minutes à une vitesse de 140 tours/minute.

**Tableau 3** de composition (en partie par rapport à la part de liant hydraulique)

| | | exemple 1 | | exemple 2 | | exemple 3 | | exemple 4 | |
|---|---|---|---|---|---|---|---|---|---|
| Liant | Liant hydraulique | Ciment Portland | 100 | Ciment Portland | 100 | Ciment Portland | 100 | Ciment Portland | 100 |
| | | Oxyde de calcium | | Oxyde de calcium | | Oxyde de calcium | | Oxyde de calcium | |
| Résine | Résine poudre re-dispersable | Copolymère acry-late | 8,11 | Copolymère acry-late | 8,11 | Copolymère acry-late | 8,11 | Copolymère acry-late | 8,11 |
| Charges minérales | Filler calcaire | Carbonate de cal-cium | 0 | Carbonate de cal-cium | 27,03 | Carbonate de cal-cium | 0 | Carbonate de cal-cium | 13,51 |
| | Sables siliceux | Silice 75-300$\mu$m | 89,19 | Silice 75-300$\mu$m | 129,73 | Silice 75-300$\mu$m | 94,59 | Silice 75-300$\mu$m | 113,38 |
| | | Silice 200-800$\mu$m | 67,57 | Silice 200-800$\mu$m | 0 | Silice 200-800$\mu$m | 67,57 | Silice 200-800$\mu$m | 32,43 |
| Additifs | Agent rhéologique | Acide silicique | 5,41 | Acide silicique | 5,41 | Acide silicique | 0 | Acide silicique | 2,7 |
| | Rétenteur d'eau | Methyl hydroxye-thyl cellulose | 0 | Methyl hydroxye-thyl cellulose | 0 | Methyl hydroxye-thyl cellulose | 0 | Methyl hydroxye-thyl cellulose | 0,14 |

## -IV- ESSAIS D'EVALUATION DU SYSTEME COMPOSITE GRILLE/MATRICE SELON L'INVENTION

### IV.1 Comportement en traction uniaxiale quasi-statique : mesure du module de traction élastique MTE

**Type d'essai :**

L'identification des propriétés intrinsèques du système composite grille/matrice selon l'invention, faute de procédure normalisée, s'appuie sur un essai de traction directe très adapté aux matériaux fissurants qui a été validé sur la base d'une approche théoricoexpérimentale [1] : *"R. CONTAMINE , A. SI LARBI, P. HAMELIN "Contribution to direct tensile testing of textile reinforced concrete (TRC) composites ". Materials Science and Engineering: A; 528 (2011), pp. 8589-8598."*

✓ **Dimensions corps d'épreuve :**

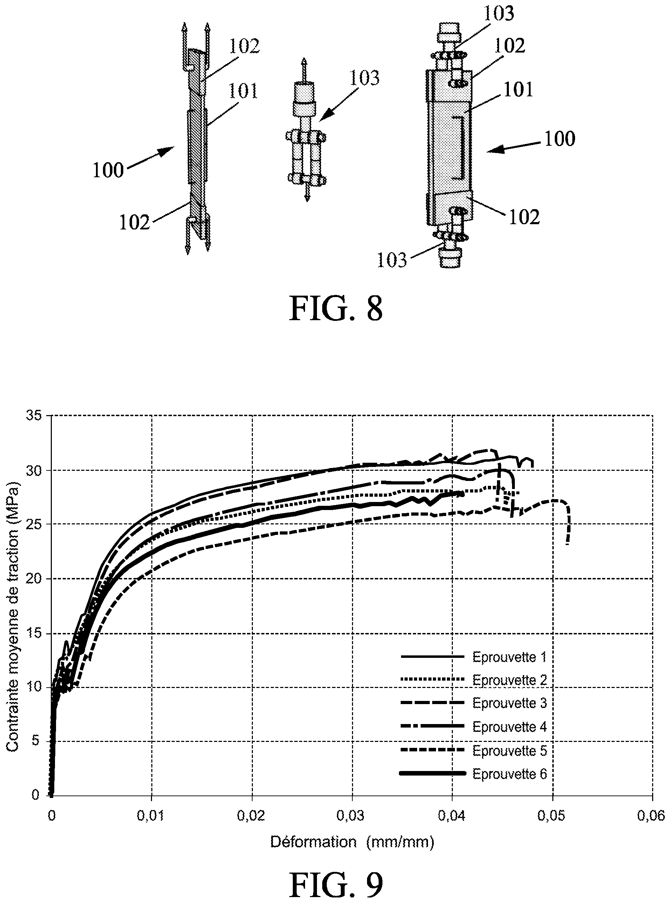

La figure 8 montre les corps d'épreuve 100 qui sont composés d'une plaque 101 de système composite grille/matrice (100 x 500 mm$^2$) ainsi que de talons d'aluminium 102 (4 x 100 x 100 mm) collés (sablage + double encollage à la colle époxy aux extrémités de la plaque). Ces talons 102 sont reliés chacun par une jonction 103 à la machine de test de traction. Le système grille carbone/verre selon invention mis en œuvre, comporte une seule grille marouflée au moyen de la matrice cimentaire. L'épaisseur du système composite, une fois durci, est de 3 mm.

✓ **Instrumentation :**

L'essai est réalisé sur une machine de traction universelle ZWICK de capacité 5 tonnes. Il s'agit d'un essai statique monotone associé à une vitesse de montée en charge de 1mm/min (jusqu'à la rupture de l'éprouvette).
L'instrumentation retenue comporte deux capteurs de déplacement LVDT $\pm$ 20 mm qui sont disposés sur les deux faces de l'éprouvette de manière centrée (latéralement et en hauteur). Un capteur de force judicieusement disposé permet d'obtenir l'évolution de l'effort appliqué.

✓ **Résultats / Conclusions :**

6 éprouvettes identiques sont réalisées et sont testées.
L'analyse des résultats consiste à tracer la courbe contrainte / déformation *(figure 9).*
Il s'agit de considérer une contrainte moyenne (hypothèse crédible compte tenu de la fissuration obtenue) dans le composite textile/mortier :

$$\sigma_c = \frac{F_c}{a \cdot b} \qquad (3)$$

a et b : respectivement la hauteur et la largeur de l'éprouvette.
La déformation moyenne est donnée par le rapport du déplacement mesuré $\Delta L_c$ sur la longueur de mesure le

$$\varepsilon_c = \frac{\Delta l_c}{l_c} \qquad (4)$$

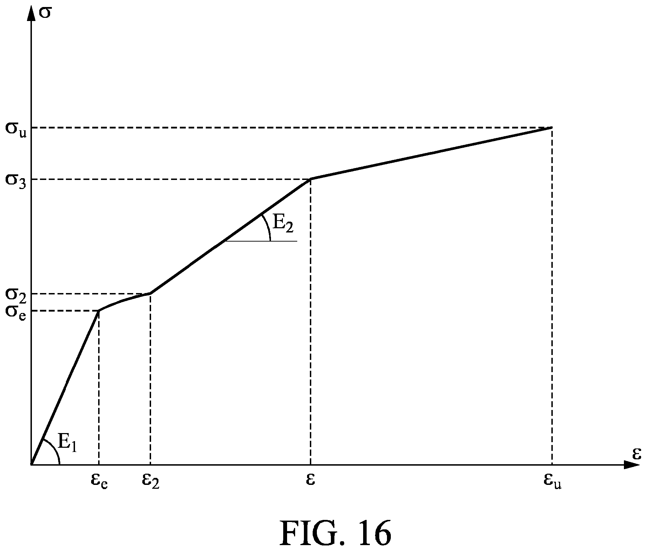

$\Delta l_c$ : allongement. $l_c$ : distance entre capteurs (200mm).
Il est loisible d'identifier assez clairement sur les courbes contrainte-déformation moyenne des similitudes qualitatives manifestes en ce sens qu'elles présentent toutes un comportement caractérisé par 4 phases distinctes. La figure 16 permet d'identifier les propriétés mécaniques globales des composites textile-mortier étudiés.
La valeur E1 du module de traction élastique MTE, caractérise la structure composite selon l'invention, notamment au regard de la résistance aux charges sismiques que la structure est à même de procurer aux ouvrages qu'elle consolide.

Les résultats obtenus sont les suivants :

| Référence | $E_1$ (MPa) | $E_2$ (MPa) | $E_3$ (MPa) | $\sigma_c$ (MPa) | $\sigma_2$ (MPa) | $\sigma_3$ (MPa) | $\sigma_u$ (MPa) | Charge de rupture (daN) |
|---|---|---|---|---|---|---|---|---|
| Eprouvette 1 | 52000 | 2300 | 114 | 10,6 | 14,1 | 22,1 | 31.4 | 9400 |
| Eprouvette 2 | 53100 | 2250 | 98 | 9.1 | 13,2 | 20,7 | 28.6 | 8780 |
| Eprouvette 3 | 53000 | 2350 | 110 | 10,1 | 14,5 | 22,1 | 32 | 9650 |
| Eprouvette 4 | 53150 | 2190 | 120 | 8,5 | 13,7 | 21 | 30,3 | 9250 |
| Eprouvette 5 | 53150 | 2290 | 110 | 8,7 | 14,5 | 19,1 | 27,2 | 8100 |
| Eprouvette 6 | 5 2 900 | 2300 | 100 | 8,4 | 12,9 | 18 | 27,9 | 8470 |
| Moyenne | 52883,3 | 2280 | 108,67 | 8,93 | 13,8 | 20,5 | 29,4 | 8951,7 |
| Ecart type | 443,47 | 54,4 | 8,36 | 1,02 | 0,67 | 1,65 | 2,21, | 577,2 |
| Valeur caractéristique | 51916.6 | 2161,4 | 90,45 | 6,71 | 12,35 | 16,9 | 24,5 | 7693,3 |

Ainsi, il apparaît que la reproductibilité des résultats sur les 6 éprouvettes, tant qualitative que quantitative, est établie. De plus, les lois de comportement obtenues traduisent les bonnes performances du système composite grille/matrice selon l'invention. En effet, qu'il s'agisse de la première zone (rigidité et contrainte de première fissuration) ou de la contrainte à rupture (de l'ordre de 30 MPa) les propriétés obtenues sont tout à fait intéressantes. Enfin, les niveaux relativement élevés de la rigidité initiale (de l'ordre 50000 MPa) et la contrainte de première fissure suggèrent une très bonne interaction initiale des éléments constitutifs du système composite grille/matrice selon l'invention.

## IV.2 Stabilité en température du système composite grille/matrice selon l'invention

### ✓ Type d'essai :

La tenue en température du système composite grille/matrice selon l'invention, en l'absence d'une procédure d'essai spécifiquement adaptée au textile-mortier, est évaluée par le biais d'un essai de traction / cisaillement à double recouvrement (blocs de béton parallèles assemblés sur deux faces symétriques par les matériaux de renforcement). Cet essai initialement prévu pour les composites à base polymère, notamment les carbone-époxy, est recommandé par le groupe de travail de l'Association Française de Génie Civil (AFGC). Le dimensionnement des éprouvettes et la surface de solidarisation sont définis en cherchant à minimiser les effets des contraintes locales pour permettre une exploitation en contrainte moyenne.

### ✓ Dimensions corps d'épreuve :

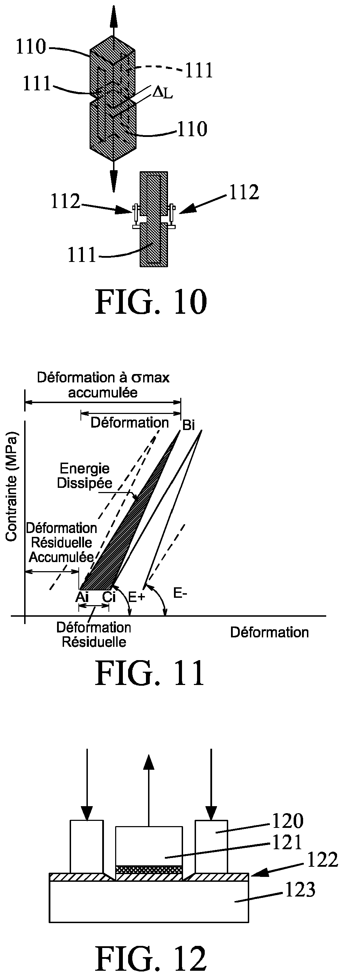

La figure 10 montre les blocs de béton 110 qui ont pour dimensions 140mm*140mm*250mm (béton préparé et mis en œuvre suivant la norme NF EN 18-422). Le système grille carbone/verre selon invention mis en œuvre, comporte une seule grille marouflée au moyen de la matrice cimentaire. L'épaisseur du système composite, une fois durci, est de 3 mm. Le système de renfort se présente sous la forme de 2 bandes 111 ayant chacune une longueur d'ancrage de 200 mm et une largeur de 50 mm. Les bandes 111 sont disposées sur 2 faces opposées des 2 blocs 110 et les relient l'un à l'autre en maintenant entre leurs 2 faces d'extrémités en regard, un écartement Δl.

### ✓ Instrumentation :

L'écartement (déplacement) des deux blocs (Δl) est enregistré en continu par des capteurs de déplacement 112 *(figure 10)* de type LVDT de course $\pm$ 5 mm de précision 10-4 mm et la vitesse de changement est de 1mm/min.

**✔ Résultats / Conclusions :**

- Essai de traction / cisaillement à 2MPa durant 30min à 20°C 60°C et 80°C

Les résultats obtenus mettent en évidence l'absence de fluage du composite sur la durée complète de l'essai (30 minutes) quelle que soit la température testée (20°C, 60°C, 80°C). Cela témoigne d'une bonne résistance du système composite de renforcement grille /matrice selon l'invention, sous sollicitations thermostimulées.

- Essai de traction / cisaillement à 2MPa durant 12h à 80°C

Les résultats obtenus valident la stabilité du système composite de renforcement grille /matrice selon l'invention, pour une température d'utilisation en service de 80°C et un taux de travail en cisaillement de 2 MPa. En effet, après une stabilisation due à la mise en charge, le fluage de l'assemblage est quasiment inexistant sur une durée de 12h.

**IV.3 Etude exploratoire en fatigue du système composite de renforcement grille /matrice selon l'invention**

**✔ Type d'essai :**

L'absence d'une procédure normalisée relative à la caractérisation de composites textile/mortier, a conduit les inventeurs à en concevoir une adaptée aux matériaux fissurants. Il s'agit d'un essai de fatigue statique monotone. L'objectif est d'évaluer, sur la base d'essais de traction directe, l'aptitude de la configuration à subir 1000 cycles de sollicitation. Dans le but de refléter au mieux les sollicitations que le système composite de renforcement grille /matrice selon l'invention, pourrait être amené à subir dans le cadre de la réparation, c'est la fatigue ondulée qui a été retenue. Au cours d'un cycle, une variation allant de 0 à 60% de la contrainte de traction maximale est donc appliquée (soit de 0 à 18MPa).

**✔ Dimensions corps d'épreuve :**

Les corps d'épreuve utilisés sont les mêmes que les corps d'épreuve 100 décrits ci-avant et représentés sur la figure 10. Le système grille carbone/verre selon invention mis en œuvre, comporte une seule grille marouflée au moyen de la matrice cimentaire. L'épaisseur du système composite, une fois durci, est de 3mm.

**✔ Instrumentation :**

L'essai est réalisé sur une machine de traction universelle ZWICK de capacité 5 tonnes dont la vitesse de montée en charge est de 1mm/min (jusqu'à la rupture de l'éprouvette). L'instrumentation retenue comporte deux capteurs de déplacement LVDT $\pm$ 20 mm qui sont disposés sur les deux faces de l'éprouvette de manière centrée (latéralement et en hauteur). Un capteur de force judicieusement disposé permet d'obtenir l'évolution de l'effort appliqué.

**✔ Résultats / Conclusions :**

L'analyse des résultats consiste principalement à apprécier l'endommagement macroscopique de l'éprouvette en prenant comme référence l'évolution de la rigidité (module d'Young ascendant E+, module d'Young descendant E-, énergie dissipée J, déformation par cycle, déformation résiduelle accumulée, déformation à la contrainte maximum) *(figure 11)*.

L'évolution de la rigidité (E+ ou E-), quasiment constante, souligne la quasi absence de dégradation macroscopique du système composite de renforcement grille /matrice selon l'invention le long des 1000 cycles. Ce constat traduit clairement les bonnes dispositions système composite de renforcement grille /matrice selon l'invention, vis-à-vis de la sollicitation de fatigue statique à 1000 cycles et suggère des performances satisfaisantes pour un nombre de cycles sensiblement plus conséquent.

L'énergie dissipée par cycle est significativement plus importante au premier cycle dans la mesure où elle correspond, pour une large part, à la formation des fissures. Au-delà, son évolution est quasiment constante les 999 cycles suivants. Les mêmes mécanismes sont mobilisés (dans des proportions stables) à partir du deuxième cycle et tendent à suggérer que la création éventuelle de fissures supplémentaires à partir du deuxième cycle est inexistante ou marginale. Cette dernière suggestion semble d'autant plus réaliste qu'elle est confortée par l'évolution de la déformation résiduelle qui demeure quasiment stable au-delà du premier cycle.

Ainsi, le système composite de renforcement grille /matrice selon l'invention, est parfaitement adapté pour une réparation de poutre vis-à-vis de sollicitations de flexion (moment fléchissant).

**IV.4 Evaluation de la cohésion superficielle du système composite de renforcement grille /matrice selon l'invention, sur support béton**

✓**Type d'essai :**

Afin de vérifier les performances du système composite de renforcement grille /matrice selon l'invention, vis-à-vis des sollicitations d'arrachement, des essais de cohésion superficielle ont été réalisés en suivant la procédure décrite dans la norme EN ISO 4624 Peinture et vernis, essais de traction, référencée dans la norme générale NF P98-284-1 [Septembre 1992 Essais relatifs aux chaussées - Produits d'étanchéité pour ouvrages d'art - Résistance à la fissuration provoquée - Partie 1 : essais sur produits coulés adhérant au support. L'adhérence du composite sur un support de type béton est ainsi mesurée par un test de traction directe].

✓ **Dimensions corps d'épreuve :**

Le béton destiné à la confection des dalles est défini par une résistance à la compression à 28 jours au moins égale à 30 MPa. Le système grille carbone/verre selon invention mis en œuvre, comporte une seule grille marouflée au moyen de la matrice cimentaire. Il est appliqué en monocouche à la surface de ce dernier. L'épaisseur du système composite, une fois durci, est de 3,0 mm $\pm$ 0,2 mm. Puis après carottage, des pastilles métalliques, au nombre de 6, sont collées grâce à un mortier époxy dont la résistance en traction est supérieure à 10 MPa.

✓ **Instrumentation :**

L'adhéromètre utilisé est de type SATEC *(figure 12 dans laquelle (120) : bague extérieure - (121) : pastilles métalliques - (122): système composite - (123): support béton).* Il permet d'appliquer manuellement un effort de traction selon une vitesse constante jusqu'à la rupture dans un délai de 90 s.

✓ **Résultats / Conclusions :**

La contrainte moyenne d'adhérence, définie par le rapport de la charge moyenne de rupture à la surface nominale de la pastille, est ainsi calculée. Cette dernière, égale à 2,1 MPa, est supérieure à 2 MPa. De plus, la rupture observée est de type cohésive, rupture dans le béton du substrat. La combinaison de ces deux résultats confirme que le système composite grille/matrice selon l'invention et adaptée au renforcement d'ouvrages en béton ou d'ouvrages de maçonnerie.

**IV.5 Résultats expérimentaux sur poutres en flexion (moment fléchissant) renforcées par matériau composite LANKOSTRUCTURE TRM**

✓ **Type d'essai :**

L'objectif est de quantifier les performances du système composite grille/matrice selon l'invention dans le cas de la réparation d'une poutre en béton armé vis-à-vis de sollicitations de flexion (moment fléchissant). Pour cette évaluation, un dimensionnement conformément à une approche réglementaire et en accord avec les moyens expérimentaux disponibles au laboratoire est réalisé. Ce dimensionnement est effectué à l'ELU (Etat Limite Ultime) et les prérequis sont les suivants :

- Se prémunir vis-à-vis de la rupture d'effort tranchant
- Rupture de la poutre en béton armé en pivot A (valorisation des renforts)
- S'affranchir de l'interaction de l'effort tranchant (flexion 4 points)

Une charge de rupture maximale de 12 tonnes est ainsi retenue. De plus, la poutre est délibérément endommagée préalablement à la mise en œuvre du système composite grille/matrice selon l'invention et la plastification des armatures tendues (taux de déformation résiduelle de l'ordre de 350 $\mu$m/m) constitue le critère d'endommagement retenu.

✓ **Dimensions corps d'épreuve :**

La figure 13 de poutre P renforcée par un système grille carbone/verre selon invention qui comporte une seule grille marouflée au moyen de la matrice cimentaire et qui se présente sous la forme d'une bande 200 de largeur correspondant à la largeur de la poutre soit 150 mm, et de longueur égale à 195 cm, soit 5 cm de moins que la longueur utile de la poutre testée, de manière à s'affranchir d'un contact parasite entre l'élément de renfort et l'appui. L'épaisseur du système composite, une fois durci, est de 3,0 mm ± 0,15 mm.

✔ **Instrumentation :**

Les essais sont conduits sur un bâti de flexion adapté. Il s'agit d'une flexion 4 points f1 f2 f3 f4 (cf. fig. 13). Pour s'affranchir de l'effort tranchant en partie centrale. Le chargement est appliqué de manière progressive (statique) monotone jusqu'à rupture. Le pilotage se fait en force (montée en charge régulière). L'instrumentation adoptée est constituée :

- d'un capteur de force d'une capacité de 200 kN;
- de jauges de déformation 201 (120 ohms) disposées sur la hauteur de la poutre P .
- d'un capteur de déplacement 202 (LVDT ± 25 mm) disposé au centre de la poutre

En complément, l'évolution comparative de l'ouverture des fissures sur la partie centrale de la poutre est établie au moyen d'un système de corrélation d'images.

✔ **Résultats / Conclusions :**

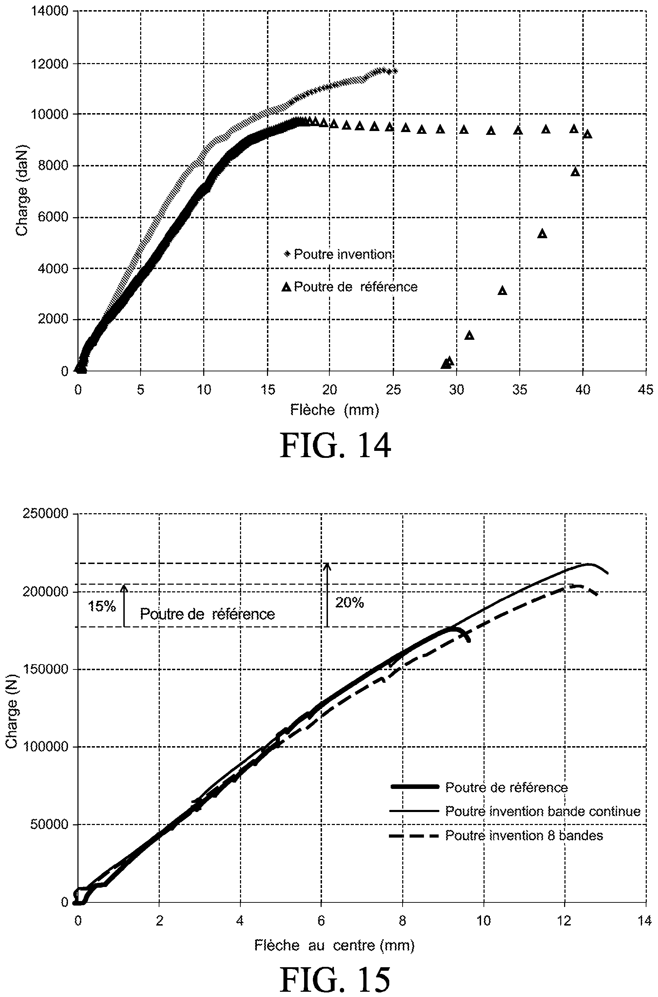

Les courbes charge-flèche associées aux deux poutres issues de la même gâchée (la poutre de référence saine et la poutre P en béton armé endommagée et réparée à l'aide du système de renforts grille/matrice selon l'invention) *(figure 14)* illustrent des comportements qualitativement semblables bien que la rigidité initiale de la poutre renforcée par le système composite grille/matrice selon l'invention, soit inférieure du fait de son endommagement avant réparation.

Au-delà de cette zone, de faible étendue, qui traduit l'intégrité macroscopique de la poutre de référence, la pente de la poutre P renforcée par le système composite grille/matrice selon l'invention, est légèrement supérieure du fait d'un pontage effectif des fissures. Puis, est mise en évidence une dernière zone non linéaire qui traduit la dégradation progressive de la poutre (essentiellement des armatures d'acier) et, le cas échéant, du renfort rapporté. D'un point de vue quantitatif, il apparaît clairement que le système composite grille/matrice selon l'invention contribue à différer le point « d'inflexion » (appellé « seuil de plastification ») par rapport à la poutre de référence. Ainsi, une augmentation de l'ordre de 20% est constatée en termes de charge à rupture et une augmentation de l'ordre de 10% est établie en termes de charge de plastification des armatures d'acier.

En ce qui concerne l'ouverture de fissure unitaire, des comportements qualitativement très semblables sont également observés. Toutefois, l'effet du renfort du système composite grille/matrice selon l'invention est clairement mis en évidence. En effet, l'ouverture unitaire de fissure est réduite de manière très sensible pour un niveau de charge équivalent, et ce jusqu'à des niveaux de charges élevés correspondant à ceux envisagés à l'ELS (Etat Limite de Service) où les problématiques liées à l'ouverture de fissures sont centrales.

✔ **Type d'essai :**

L'objectif est de quantifier les performances associées au système composite grille/matrice selon l'invention dans le cas de la réparation d'une poutre en béton armé vis-à-vis de sollicitations d'effort tranchant. Pour cette évaluation, un dimensionnement conformément à une approche réglementaire (BAEL et EUROCODE 2) et en accord avec les moyens expérimentaux disponibles au laboratoire est réalisé, les prérequis de ce dimensionnement sont les suivants :

- Se prémunir vis-à-vis de la rupture de moment fléchissant
- Localiser la rupture sur un seul côté pour une meilleure appréhension des phénomènes physiques
- Rupture de la poutre par cisaillement « pur » (macro fissure oblique)

✔ **Dimensions corps d'épreuve :**

Le système composite grille/matrice selon l'invention de renforcement, est mis en œuvre sur la poutre selon deux configurations :

- 1 seule bande continue de 650 mm sur tout le pourtour
- 8 bandes de 30 mm de largeur sur les faces latérales et inférieure

La longueur utile des poutres testées est de 2 m. L'épaisseur du système composite, une fois durci, est de 3,0 mm ± 0,25 mm.

✔ **Instrumentation :**

L'instrumentation est constituée de :

- 2 jauges de déformation (120 ohms) disposées sur les armatures (1 sur les aciers transversaux de la partie sous dimensionnée, la dernière est collée en partie centrale des aciers longitudinaux)
- 1 capteur de déplacement (LVDT $\pm$ 25 mm) positionné à mi-travée des poutres
- 1 capteur de force de capacité 50 kN

✔ **Résultats / Conclusions :**

Les courbes charge - flèche obtenues confirment les très bonnes dispositions du système composite grille/matrice selon l'invention pour la réparation et/ou renforcement vis-à-vis de l'effort tranchant *(figure 15)*.

Le système composite grille/matrice selon l'invention contribue significativement à l'augmentation de la charge ultime par rapport à la poutre référence. Ainsi, les écarts vont grosso modo de 15 à 20 % ce qui se révèle d'autant plus satisfaisant que seule une couche de composite a été mise en oeuvre.

De plus, un zoom à l'échelle locale permet de souligner l'aptitude du renfort système composite grille/matrice selon l'invention (indépendamment de la configuration retenue) à générer un niveau de déformation de l'acier très sensiblement supérieur à celui de la poutre de référence. Ce paramètre constitue un indicateur du niveau de ductilité de l'élément de structure.

**Revendications**

1.  Grille de consolidation d'ouvrage de béton armé ou de maçonnerie comprenant au moins une couche formée:

    - d'une part, d'une armature (2) constituée de fils de chaîne (2°c) et de fils de trame plats (2°t);
    - et, d'autre part, d'un réseau (3) de liage de l'armature:
    où le réseau de liage est tel qu'il assure la régularité géométrique et la stabilité dimensionnelle sous contrainte des mailles de l'armature, avant l'application de la grille sur l'ouvrage à consolider, où le réseau de liage de l'armature est une armure constituée d'éléments de chaîne (3°c) et d'éléments de trame (3°t), et **caractérisé en ce que** cette armure est à pas de gaze; chaque élément de chaîne (3°c) de cette armure comprenant au moins deux fils de liage (3i°c, 3ii°c), de préférence deux, et chaque élément de trame (3°t) de cette armure comprenant au moins un fil de liage (3°t,3°t'), de préférence un, et **en ce que**:

        • chaque élément de chaîne (3°c) de l'armure comprend deux fils de liage de chaine (3i°c, 3ii°c) et chaque élément de trame (3°t) de l'armure comprend un fil de liage de trame (3°t,3°t'),
        • l'un des deux fils de liage passe d'un même côté C1 de tous les fils de trame de l'armature,
        • l'autre fil de liage de chaine passe d'un même côté C2 opposé à C1 de tous les fils de trame de l'armature,
        • entre deux fils de trame successifs de l'armature, les fils de liage de chaine (3i°c, 3ii°c) se croisent avant le fil de liage de trame (3°t,3°t'), passent de part et d'autre du fil de liage de trame puis se recroisent pour enserrer le fil de trame de l'armature.

2.  Système composite de consolidation d'ouvrages, notamment de béton armé ou de maçonnerie, comprenant une matrice durcissable ou durcie et une grille selon la revendication 1.

3.  Système selon la revendication 2 **caractérisé en ce que** la stabilité dimensionnelle sous contrainte est qualifiée comme suit dans un test TS:
    La déformation d'un échantillon de 40x40 cm suspendu par ces deux coins supérieurs dans un plan vertical et soumis à la contrainte en traction d'une masse de 1 (déformation D1) ou 2 kg (déformation D2) accrochée au milieu du bord inférieur de l'échantillon, est telle que:

        • D1 inférieure ou égale à - en cm et dans un ordre croissant de préférence - : 2,5 ; 1,5 ; 1,0 ; 0,8 ; 0,6 ; 0,5 ; 0,3 ; 0,2 ; 0,1 ;
        • D2 inférieure ou égale à - en cm et dans un ordre croissant de préférence - : 5 ; 4 ; 3 ; 2 ; 1,8 ; 1,6 ; 1,5 ; 1,4 ; 1,2 ; 1,0 ;

4.  Système selon la revendication 2 ou 3 **caractérisé en ce qu'**au moins une partie des fils de la grille sont enduits/imprégnés d'au moins un polymère, de préférence choisi dans le groupe comprenant-ou mieux encore constitué par- :

- les (co)polymères (meth)acryliques, avantageusement sélectionnés dans le sous-groupe comprenant-ou mieux encore constitué par- les copolymères d'alkylesters comprenant avantageusement 1 à 8 atomes de carbone, avec l'acide acrylique, ou l'acide méthacrylique, en particulier ceux choisis dans la famille comprenant-ou mieux encore constituée par- de préférence l'acrylate de méthyle, l'acrylate d'éthyle, l'acrylate de butyle, l'acrylate d'éthyle 2 hexyle et leurs correspondants avec l'acide méthacrylique; et leurs mélanges;
- les (co)polymères d'esters vinyliques avantageusement sélectionnés dans le sous-groupe comprenant-ou mieux encore constitué par- les homopolymères et les copolymères d'acétate de vinyle, en particulier ceux choisis dans la famille comprenant-ou mieux encore constituée par- les copolymères d'acétate de vinyle et d'éthylène, les (co)polymères de chlorure de vinyle tels que les copolymères de chlorure de vinyle et d'éthylène, les (co)polymères de laurate de vinyle, les (co)polymères de versatate de vinyle, les (co)polymères d'esters vinyliques d'acides alpha monocarboxyliques, saturés ou non, ramifiés ou non, comprenant avantageusement 9 ou 10 atomes de carbone, les homopolymères d'esters vinyliques d'acides alkylcarboxyliques, saturés ou non, ramifiés ou non, comprenant avantageusement de 3 à 8 atomes de carbone, des copolymères de ces derniers homopolymères avec l'éthylène, le chlorure de vinyle, et/ou d'autres esters vinyliques; et leurs mélanges;
- les (co)polymères de styrène avec le butadiène ou avec un ou plusieurs esters acryliques avantageusement sélectionnés dans le sous-groupe comprenant-ou mieux encore constitué par les alkylesters éthyléniquement insaturés comprenant avantageusement de 1 à 8 atomes de carbone de l'acide (meth)acrylique, de préférence l'acrylate de méthyle, l'acrylate d'éthyle, l'acrylate de butyle, l'acrylate d'éthyle 2 hexyle et leurs correspondants avec l'acide méthacrylique; et leurs mélanges;
- les (co)polymères thermofusibles, avantageusement sélectionnés dans le sous-groupe comprenant-ou mieux encore constitué par- les polyéthylènes, les polypropylènes, les polyesters, les polyamides, les copolymères Ethylène-Propylène-Diène Monomère (EPDM), et leurs mélanges;
- et leurs mélanges.

5. Système selon l'une au moins des revendications 2 à 4 **caractérisé en ce que** les fils de trame et les fils de chaîne de l'armature sont compris dans deux plans parallèles.

6. Système selon l'une au moins des revendications 2 à 5 **caractérisé en ce que** la matrice durcissable comprend (en parties en poids sur sec ) :

   ◦ 100 de liant;
   ◦ 1 - 4000, et dans un ordre croissant de préférence, 5 - 2000 ; 10 - 1000 ; 20 - 500 de charges minérales ;
   ◦ 0,01 - 1000, et dans un ordre croissant de préférence, 0,05 - 800 ; 0,1 - 500 ; 0,5 - 200 ; 1 - 50 d'au moins une résine;
   ◦ 0 - 500 d'additifs, et préférentiellement 0,01 - 50.

7. Structure composite durcie obtenue à partir du système selon l'une au moins des revendications 2 à 6.

8. Procédé de consolidation d'ouvrage en béton armé ou de maçonnerie **caractérisé en ce qu'**il consiste à maroufler la grille telle que définie dans la revendication 1, sur l'ouvrage avec la matrice telle que définie dans la revendication 2 ou 6, après avoir mélangé ladite matrice avec un liquide, de préférence de l'eau, pour obtenir une matrice humide durcissable.

9. Procédé selon la revendication 8 **caractérisé en ce que** la matrice humide durcissable est projetée sur l'ouvrage, de préférence au moyen d'une pompe, on positionne ensuite la grille sur la matrice non durcie et on procède au marouflage, de préférence à l'aide d'une lisseuse, et éventuellement on renouvelle au moins une fois la projection de matrice, de préférence en lissant la surface de la matrice ainsi projetée avec la lisseuse.

10. Utilisation d'une grille selon la revendication 1 ou visée dans la revendication 2 pour consolider notamment un ouvrage de béton armé ou de maçonnerie, par marouflage, à l'aide d'une formulation humide comprenant la matrice telle que définie dans la revendication 2 ou 6, mélangée à un liquide, de préférence de l'eau.

**Patentansprüche**

1. Gitter zur Konsolidierung eines Bauwerks aus bewehrtem Beton oder Mauerwerk, das mindestens eine Schicht umfasst, die gebildet ist aus:

- einerseits einer Bewehrung (2), die aus flachen Kettfäden (2°c) und Schussfäden (2°t) besteht;
- und andererseits einem Bindenetzwerk (3) für die Bewehrung;

wobei das Bindenetzwerk so beschaffen ist, dass es die geometrische Regelmäßigkeit und die Maßhaltigkeit der Maschen der Bewehrung unter Belastung vor dem Aufbringen des Gitters auf das zu konsolidierende Bauwerk gewährleistet, wobei es sich bei dem Bindenetzwerk für die Bewehrung um eine Bindung handelt, die aus Kettelementen (3°c) und Schusselementen (3°t) besteht, und **dadurch gekennzeichnet, dass** es sich bei dieser Bindung um eine Dreherbindung handelt; wobei jedes Kettelement (3°c) dieser Bindung mindestens zwei Bindefäden (3i°c, 3ii°c), vorzugsweise zwei, umfasst und jedes Schusselement (3°t) dieser Bindung mindestens einen Bindefaden (3°t,3°t'), vorzugsweise einen, umfasst und dass:

• jedes Kettelement (3°c) der Bindung zwei Kettbindefäden (3i°c, 3ii°c) umfasst und jedes Schusselement (3°t) der Bindung einen Schussbindefaden (3°t,3°t') umfasst,
• einer der beiden Bindefäden an einer gleichen Seite C1 aller Schussfäden der Bewehrung verläuft,
• der andere Kettbindefaden an einer C1 gegenüberliegenden gleichen Seite C2 aller Schussfäden der Bewehrung verläuft,
• sich die Kettbindefäden (3i°c, 3ii°c) zwischen zwei aufeinanderfolgenden Schussfäden der Bewehrung vor dem Schussbindefaden (3°t,3°t') kreuzen, an beiden Seiten des Schussbindefadens verlaufen und sich dann wieder kreuzen, um den Schussfaden der Bewehrung zu umschlingen.

2. Verbundsystem zur Konsolidierung von Bauwerken, insbesondere aus bewehrtem Beton oder Mauerwerk, umfassend eine härtbare oder gehärtete Matrix und ein Gitter nach Anspruch 1.

3. System nach Anspruch 2, **dadurch gekennzeichnet, dass** die Maßhaltigkeit unter Belastung wie folgt in einem TS-Test bestimmt wird:
Die Deformation einer 40 x 40 cm großen Probe, die an ihren beiden oberen Ecken in einer vertikalen Ebene aufgehängt und der Zugbelastung einer Masse von 1 (Deformation D1) oder 2 kg (Deformation D2), die in der Mitte des unteren Rands der Probe angehängt wird, unterworfen wird, ist so beschaffen, dass:

• D1 kleiner oder gleich - in cm und in einer Reihenfolge zunehmender Bevorzugung - : 2,5; 1,5; 1,0; 0,8; 0,6; 0,5; 0,3; 0,2; 0,1 ist;
• D2 kleiner oder gleich - in cm und in einer Reihenfolge zunehmender Bevorzugung - : 5; 4; 3; 2; 1,8; 1,6; 1,5; 1,4; 1,2; 1,0 ist.

4. System nach Anspruch 2 oder 3, **dadurch gekennzeichnet, dass** mindestens ein Teil der Fäden des Gitters mit mindestens einem Polymer bedeckt/imprägniert ist, welches vorzugsweise aus der Gruppe umfassend - oder noch besser bestehend aus -:

• (Meth)acryl(co)polymeren, vorteilhafterweise ausgewählt aus der Untergruppe umfassend - oder noch besser bestehend aus - Copolymeren von Alkylestern mit vorteilhafterweise 1 bis 8 Kohlenstoffatomen mit Acrylsäure oder Methacrylsäure, insbesondere denjenigen aus der Familie umfassend - oder noch besser bestehend aus - vorzugsweise Methylacrylat, Ethylacrylat, Butylacrylat, 2-Ethylhexylacrylat und den Methacrylsäure-Pendants davon; und Mischungen davon;
• Vinylester(co)polymeren, vorteilhafterweise ausgewählt aus der Untergruppe umfassend - oder noch besser bestehend aus - Homopolymeren und Copolymeren von Vinylacetat, insbesondere denjenigen aus der Familie umfassend - oder noch besser bestehend aus - Copolymeren von Vinylacetat und Ethylen, (Co)polymeren von Vinylchlorid wie Copolymeren von Vinylchlorid und Ethylen, (Co)polymeren von Vinyllaurat, (Co)polymeren von Vinylversatat, (Co)polymeren von Vinylestern von gesättigten oder ungesättigten, verzweigten oder unverzweigten alpha-Monocarbonsäuren mit vorteilhafterweise 9 oder 10 Kohlenstoffatomen, Homopolymeren von Vinylestern von gesättigten oder ungesättigten, verzweigten oder unverzweigten Alkylcarbonsäuren mit vorteilhafterweise 3 bis 8 Kohlenstoffatomen, Copolymeren dieser letzteren Homopolymere mit Ethylen, Vinylchlorid und/oder anderen Vinylestern; und Mischungen davon;
• (Co)polymeren von Styrol mit Butadien oder mit einem oder mehreren Acrylsäureestern, vorteilhafterweise ausgewählt aus der Untergruppe umfassend - oder noch besser bestehend aus - ethylenisch ungesättigten Alkylestern mit vorteilhafterweise 1 bis 8 Kohlenstoffatomen von (Meth)acrylsäure, vorzugsweise Methylacrylat, Ethylacrylat, Butylacrylat, 2-Ethylhexylacrylat und den Methacrylsäure-Pendants davon; und Mischungen davon;

- heißschmelzbaren (Co)polymeren, vorteilhafterweise ausgewählt aus der Untergruppe umfassend - oder noch besser bestehend aus - Polyethylenen, Polypropylenen, Polyestern, Polyamiden, Ethylen-Propylen-Dienmonomer(EPDM)-Copolymeren und Mischungen davon;
- und Mischungen davon
- ausgewählt ist.

5. System nach mindestens einem der Ansprüche 2 bis 4, **dadurch gekennzeichnet, dass** die Schussfäden und die Kettfäden der Bewehrung in zwei parallelen Ebenen enthalten sind.

6. System nach mindestens einem der Ansprüche 2 bis 5, **dadurch gekennzeichnet, dass** die härtbare Matrix Folgendes umfasst (in Gewichtsteilen auf Trockenbasis):

  ○ 100 Bindemittel;
  ○ 1 - 4000 und in einer Reihenfolge zunehmender Bevorzugung 5 - 2000; 10 - 1000; 20 - 500 mineralische Füllstoffe;
  ○ 0,01 - 1000 und in einer Reihenfolge zunehmender Bevorzugung 0,05 - 800; 0,1 - 500; 0,5 - 200; 1 - 50 mindestens eines Harzes;
  ○ 0 - 500 Additive, und vorzugsweise 0,01 - 50.

7. Gehärtete Verbundstruktur, erhalten aus dem System nach mindestens einem der Ansprüche 2 bis 6.

8. Verfahren zur Konsolidierung eines Bauwerks aus bewehrtem Beton oder Mauerwerk, **dadurch gekennzeichnet, dass** es darin besteht, dass man das Gitter gemäß Anspruch 1 auf das Bauwerk mit der Matrix gemäß Anspruch 2 oder 6 nach dem Mischen der Matrix mit einer Flüssigkeit, vorzugsweise Wasser, zum Erhalt einer härtbaren feuchten Matrix aufzieht.

9. Verfahren nach Anspruch 8, **dadurch gekennzeichnet, dass** die härtbare feuchte Matrix auf das Bauwerk aufgespritzt wird, vorzugsweise mit einer Pumpe, dann das Gitter auf der nicht gehärteten Matrix positioniert und das Aufziehen durchgeführt wird, vorzugsweise mit Hilfe einer Glättkelle, und gegebenenfalls erneut mindestens einmal Matrix aufgespritzt wird, vorzugsweise unter Glättung der Oberfläche der so aufgespritzten Matrix mit der Glättkelle.

10. Verwendung eines Gitters nach Anspruch 1 oder eines in Anspruch 2 vorgesehenen Gitters zur Konsolidierung insbesondere eines Bauwerks aus bewehrtem Beton oder Mauerwerk durch Aufziehen mit Hilfe einer feuchten Formulierung, die die Matrix gemäß Anspruch 2 oder 6 in Abmischung mit einer Flüssigkeit, vorzugsweise Wasser, umfasst.

**Claims**

1. Grille for consolidating a reinforced concrete or masonry structure comprising at least one layer formed:

  - on the one hand, by a reinforcement (2) constituted of flat warp threads (2°c) and weft threads (2°t);
  - and, on the other hand, by a binding network (3) of the reinforcement;

    wherein the binding network is such that it ensures the geometric regularity and dimensional stability under stress of the meshes of the reinforcement, before the grille is applied to the structure to be consolidated, wherein the binding network of the reinforcement is a weave constituted of warp elements (3°c) and weft elements (3°t), and **characterized in that** this weave is a leno weave; each warp element (3°c) of this weave comprising at least two binding threads (3i°c, 3ii°c), preferably two, and each weft element (3°t) of this weave comprising at least one binding thread (3°t, 3°t'), preferably one, and **in that**:

      • each warp element (3°c) of the weave comprises two warp binding threads (3i°c, 3ii°c) and each weft element (3°t) of the weave comprises one weft binding thread (3°t, 3°t'),
      • one of the two binding threads passes on one and the same side C1 of all the weft threads of the reinforcement,
      • the other warp binding thread passes on one and the same side C2, opposite C1, of all the weft threads of the reinforcement,
      • between two successive weft threads of the reinforcement, the warp binding threads (3i°c, 3ii°c) cross before the weft binding thread (3°t, 3°t'), pass on either side of the weft binding thread and then cross again to clasp the weft thread of the reinforcement.

2. Composite system for consolidating structures, in particular of reinforced concrete or masonry, comprising a hardenable or hardened matrix and a grille according to Claim 1.

3. System according to Claim 2, **characterized in that** the dimensional stability under stress is qualified as follows in a test TS:
the deformation of a 40x40 cm sample suspended by its two upper corners in a vertical plane and subjected to the tensile stress of a mass of 1 (deformation D1) or 2 kg (deformation D2) attached to the middle of the lower edge of the sample, is such that:

- D1 is less than or equal to - in cm and in an increasing order of preference -: 2.5; 1.5; 1.0; 0.8; 0.6; 0.5; 0.3; 0.2; 0.1;
- D2 is less than or equal to - in cm and in an increasing order of preference -: 5; 4; 3; 2; 1.8; 1.6; 1.5; 1.4; 1.2; 1.0.

4. System according to Claim 2 or 3, **characterized in that** at least a part of the threads of the grille are coated/impregnated with at least one polymer, preferably chosen from the group comprising - or better still constituted by -:

- (meth)acrylic (co)polymers, advantageously selected from the sub-group comprising - or better still constituted by - copolymers of alkyl esters comprising advantageously 1 to 8 carbon atoms, with acrylic acid, or methacrylic acid, in particular those chosen from the family comprising - or better still constituted by - preferably methyl acrylate, ethyl acrylate, butyl acrylate, 2-ethylhexyl acrylate and counterparts thereof with methacrylic acid; and mixtures thereof;
- vinyl ester (co)polymers advantageously selected from the sub-group comprising - or better still constituted by - vinyl acetate homopolymers and copolymers, in particular those chosen from the family comprising - or better still constituted by - copolymers of vinyl acetate and of ethylene, vinyl chloride (co)polymers such as copolymers of vinyl chloride and of ethylene, vinyl laurate (co)polymers, vinyl versatate (co)polymers, (co)polymers of vinyl esters of saturated or unsaturated, branched or unbranched alpha-monocarboxylic acids comprising advantageously 9 or 10 carbon atoms, homopolymers of vinyl esters of saturated or unsaturated, branched or unbranched alkylcarboxylic acids comprising advantageously from 3 to 8 carbon atoms, copolymers of the latter homopolymers with ethylene, vinyl chloride, and/or other vinyl esters; and mixtures thereof;
- (co)polymers of styrene with butadiene or with one or more acrylic esters advantageously selected from the sub-group comprising - or better still constituted by - ethylenically unsaturated alkyl esters comprising advantageously from 1 to 8 carbon atoms of (meth)acrylic acid, preferably methyl acrylate, ethyl acrylate, butyl acrylate, 2-ethylhexyl acrylate and counterparts thereof with methacrylic acid; and mixtures thereof;
- hot-melt (co)polymers, advantageously selected from the sub-group comprising - or better still constituted by - polyethylenes, polypropylenes, polyesters, polyamides, ethylene-propylene-diene monomer (EPDM) copolymers, and mixtures thereof;
- and mixtures thereof.

5. System according to at least one of Claims 2 to 4, **characterized in that** the weft threads and the warp threads of the reinforcement are comprised in two parallel planes.

6. System according to at least one of Claims 2 to 5, **characterized in that** the hardenable matrix comprises (in parts by weight on a dry basis):

○ 100 of binder;
○ 1-4000, and in an increasing order of preference, 5-2000; 10-1000; 20-500 of mineral fillers;
○ 0.01-1000, and in an increasing order of preference, 0.05-800; 0.1-500; 0.5-200; 1-50 of at least one resin;
○ 0-500 of additives, and preferentially 0.01-50.

7. Hardened composite structure obtained from the system according to at least one of Claims 2 to 6.

8. Method for consolidating a structure made of reinforced concrete or masonry, **characterized in that** it consists in press-mounting the grille as defined in Claim 1 on the structure with the matrix as defined in Claim 2 or 6, after having mixed said matrix with a liquid, preferably water, to obtain a hardenable wet matrix.

9. Method according to Claim 8, **characterized in that** the hardenable wet matrix is sprayed onto the structure, preferably by means of a pump, the grille is then positioned on the unhardened matrix and the press-mounting is carried out, preferably using a trowel, and optionally the matrix is sprayed at least once more, preferably while smoothing the surface of the matrix thus sprayed with the trowel.

10. Use of a grille according to Claim 1 or referred to in Claim 2 to consolidate in particular a reinforced concrete or masonry structure, by press-mounting, using a wet formulation comprising the matrix as defined in Claim 2 or 6, mixed with a liquid, preferably water.

FIG. 1

FIG. 2

FIG. 3

FIG. 13

FIG. 4

FIG. 5

FIG. 6

FIG. 7

FIG. 8

FIG. 9

## FIG. 10

Déformation à σmax
accumulée

Déformation

Contrainte (MPa)

Bi

Energie
Dissipée

Déformation
Résiduelle
Accumulée

Ai   Ci   E+      E-

Déformation
Résiduelle                    Déformation

## FIG. 11

120
121
122
123

## FIG. 12

FIG. 14

FIG. 15

FIG. 16

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- DE 19525508 A1
- EP 0994223 B1
- EP 1245547 B1
- EP 1893793 B1
- KR 101308513 B1
- US 7288147 B

**Littérature non-brevet citée dans la description**

- **R. CONTAMINE** ; **A. SI LARBI** ; **P. HAMELIN**. Contribution to direct tensile testing of textile reinforced concrete (TRC) composites. *Materials Science and Engineering: A*, 2011, vol. 528, 8589-8598